# EUROPEAN PATENT APPLICATION

(11) **EP 4 835 038 A1**
(43) Date of publication of application: **04.11.2026**
(21) Application number: 24910838.2
(22) Date of filing: 17.12.2024
(51) Int. Cl.: C09K 19/54, C09K 19/34, G02F 1/13

(54) **LIQUID CRYSTAL COMPOSITION AND LIQUID CRYSTAL DISPLAY DEVICE CONTAINING SAME**

(30) Priority: 29.12.2023 CN 202311869200
(71) Applicant: Jiangsu Hecheng Display Technology Co., Ltd., Nanjing, Jiangsu 210000 (CN)
(72) Inventor: WANG, Yayun, Nanjing, Jiangsu 210000 (CN); DING, Wenquan, Nanjing, Jiangsu 210000 (CN); HE, Di, Nanjing, Jiangsu 210000 (CN); WANG, Panpan, Nanjing, Jiangsu 210000 (CN); YAO, Lifang, Nanjing, Jiangsu 210000 (CN); PAN, Dike, Nanjing, Jiangsu 210000 (CN)
(74) Representative: Serjeants LLP
(86) International application number: PCT/CN2024/139975
(87) International publication number: WO 2025/139907

(57) **Abstract**

The present application provides a liquid crystal composition and a liquid crystal display device containing the same. The liquid crystal composition comprises at least one compound of formula I, and at least one stabilizer. By means of compounding the stabilizer having a specific structure with the compound of formula I having a dibenzo structure, the liquid crystal composition has relatively high elastic constants K₁₁ and K₃₃, a relatively small rotational viscosity γ₁, a relatively short response time RT, a relatively high response speed, a relatively high transmittance Tr, a relatively high contrast ratio CR and a relatively good low-temperature storage stability while an appropriate clearing point, an appropriate optical anisotropy and an appropriate dielectric anisotropy are maintained; the liquid crystal composition has a wider nematic phase temperature range, and the image sticking retention is reduced or the dissipation of the image retention is accelerated; the liquid crystal composition has a higher voltage holding ratio VHR, which facilitates the improvement of the overall use effect of a liquid crystal material, and the liquid crystal composition is applicable to fast-response display modes such as VA, PSVA, IPS and NFFS.

## Description

### Technical Field

The present application belongs to the technical field of liquid crystal materials, specifically relates to a liquid crystal composition and a liquid crystal display device containing the same.

### Background Arts

For its small size, light weight, low power consumption and excellent display quality, liquid crystal display (LCD) has achieved rapid development, and especially a wide application in portable electronic information products. With the increase in the size of the liquid crystal screens for portable computers, office applications, video applications, the liquid crystal display can be used for large-screen displays and eventually replace the cathode ray tube (CRT) display.

Compared with traditional display devices and display materials, liquid crystal display materials have the following obvious advantages: low driving voltage, small power consumption, high reliability, large amount of display information, color display, no flicker, no harm to the human body, automatic production process, low cost, ability of being made into liquid crystal displays of various specifications and types, easy to be carried and so on. Because of these advantages, liquid crystal display technology has had a profound impact on the field of imaging display and has promoted the development of microelectronics technology and optoelectronic information technology. Liquid crystal materials have been widely used on many display occasions due to the good optical properties and photoelectric effects thereof.

Dibenzo compounds 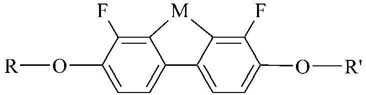 are a relatively novel class of liquid crystal monomer materials that have emerged in recent years, wherein R and R' represent hydrogen atoms, alkyl groups, cycloalkyl groups, alkoxy groups, tetrahydrofuran groups, tetrahydrothiophene groups or the like; and M represents an oxygen or sulfur atom. Due to their characteristic benzofuran or benzothiophene structures, dibenzo compounds have advantages such as large elastic constant, large dielectric coefficient, and structural stability, which provides excellent performances in TFT liquid crystals with fast response, high transmittance, and high contrast.

Although the dibenzo compound bring advantages, such as a relatively low threshold voltages, relatively short response time and the like, to the liquid crystal display device due to the large dielectric coefficient, the strong electronegativity thereof causes that when the liquid crystal mixture containing the same is exposed to conditions such as external stresses (especially one-drop filling, abbreviated as ODF), sealant curing, UV/backlight irradiation and the like, the liquid crystal mixture tends to adsorb the impurity ions from the device and the free radicals from the polyimide alignment layers. This leads to a decline in the reliability of the liquid crystal mixture such as the resistivity, voltage holding ratio (VHR) or the like, resulting in situations such as image sticking, slow dissipation, and image retention after a prolonged power-up operation, and reducing the stability of the liquid crystal mixture. Therefore, there is an urgent need for a class of liquid crystal materials that can take the advantages of dibenzo compounds into account while addressing the issue of image retention caused by the reduced liquid crystal reliability due to external stresses.

### Summary of the Invention

The following is a summary of the subject matter detailed herein. This summary is not intended to limit the protection scope of the claims.

The present application provides a liquid crystal composition and a liquid crystal display device containing the same. While an appropriate clearing point, an appropriate optical anisotropy and an appropriate dielectric anisotropy are maintained, the liquid crystal composition has a relatively low viscosity, relatively large elastic constants, a relatively high response speed, a relatively high transmittance, a relatively good low-temperature storage stability, a wider nematic phase temperature range and a better contrast ratio, and the image sticking retention could be eliminated or the dissipation of the image retention is accelerated.

In the first aspect, the present application provides a liquid crystal composition comprising:
at least one compound of formula I: 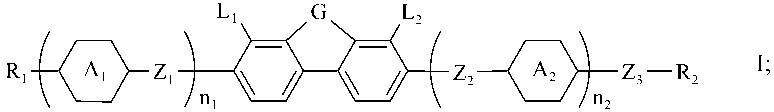 and
at least one stabilizer, the stabilizer is selected from a group consisting of the following compounds: 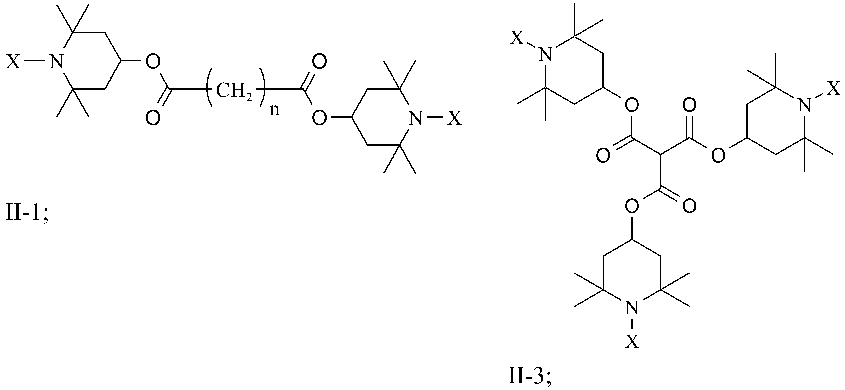 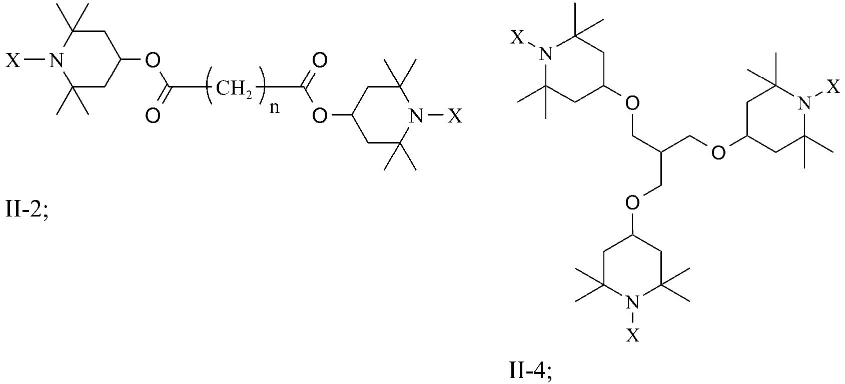
wherein, R₁ represents -H, halogen, C₁₋₁₂ (for example, C₁, C₂, C₃, C₄, C₅, C₆, C₇, C₈, C₉, C₁₀, C₁₁ or C₁₂) linear or branched alkyl, 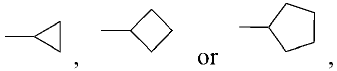 one or at least two nonadjacent -CH₂- in the C₁₋₁₂ linear or branched alkyl, 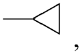 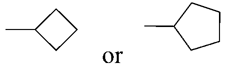 can each be independently replaced by -CH=CH-, -C=C-, -O-, -S-, -CO-, -CO-O- or -O-CO-, one or at least two -H in the aforesaid groups can each be independently substituted by -F or -Cl;
R₂ represents C₁₋₃ (for example, C₁, C₂ or C₃) halogenated alkyl, 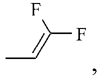 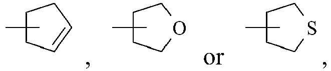 wherein one or at most two single bonds in 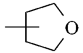 or 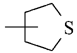 can be replaced by double bond;
ring 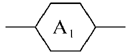 and ring 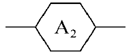 each independently represents 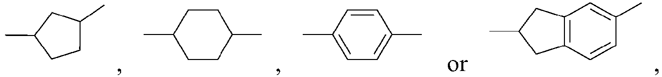 one or at least two -CH₂- in the 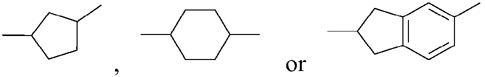 can be replaced by -O-; one or at most two single bonds in the rings can be replaced by double bond; one or at least two -H in the 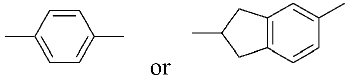 can be substituted by -F, -Cl, -CN, -CH₃ or -OCH₃, one or at least two -CH= in the rings can be replaced by -N=;
Z₁ and Z₂ each independently represents single bond, -O-, -S- -CO-O-, -O-CO-, -CH₂O-, -OCH₂-, -CH=CH-, -C=C-, -CH₂CH₂-, -CF₂CF₂-, -(CH₂)₄-, -CF₂O- or -OCF₂-;
Z₃ represents single bond, -O(CH₂)ₐ- or -S(CH₂)ₐ-; a represents an integer of 0-5, for example, it can be 0, 1, 2, 3, 4 or 5;
L₁ and L₂ each independently represents -H, halogen, C₁₋₃ (for example, C₁, C₂ or C₃) halogenated or unhalogenated alkyl, or C₁₋₃ (for example, C₁, C₂ or C₃) halogenated or unhalogenated alkoxy;
G represents -O-, -S- -CO-, -CF₂-, -NH- or -NF-;
X represents -H, -OH, -O* or C₁₋₅ (for example, C₁, C₂, C₃, C₄ or C₅) linear or branched alkyl; one or at least two nonadjacent -CH₂- in the C₁₋₅ linear or branched alkyl can each be independently replaced by -O- or -CO-; -O* represents oxygen radical;
n₁ represents 0 or 1;
n₂ represents 0, 1 or 2; when n₂=2, ring 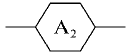 can be the same or different, Z₂ can be the same or different;
n represents an integer of 1-20, for example, it can be 1, 2, 3, 4, 5, 6, 7, 8, 9, 10, 11, 12, 13, 14, 15, 16, 17, 18, 19 or 20.

It is found in the present application that during the application of a supersaturated voltage, ions in the liquid crystal and device continuously accumulate near the upper and lower electrode plates under the influence of a dc bias. After the power is removed, the internal electric field formed by the ions that do not easily dissipate causes the liquid crystal to remain deflected, resulting in a gradual decrease in brightness and the formation of image retention. The liquid crystal composition provided by the present application comprises at least one stabilizer selected from a group consisting of the compound of formula II-1, the compound of formula II-2, the compound of formula II-3, and the compound of formula II-4. The stabilizer is a hindered amine light stabilizer capable of adsorbing ions/radicals, eliminating the internal electric field, and causing the afterimage to dissipate rapidly. In the present application, the stabilizer with a specific structure is compounded with the compound of formula I having a dibenzo structure, so that the liquid crystal composition has relatively high elastic constants (K₁₁ and K₃₃), a relatively small rotational viscosity γ₁, a relatively short response time RT and a relatively high response speed, a relatively high transmittance Tr, a relatively high contrast ratio CR and a relatively good low-temperature storage stability while an appropriate clearing point, an appropriate optical anisotropy and an appropriate dielectric anisotropy are maintained. The liquid crystal composition has a wider nematic phase temperature range, and the image sticking retention is reduced or the dissipation of the image retention is accelerated. The liquid crystal composition has a higher voltage holding ratio VHR, which facilitates the improvement of the overall use effect of a liquid crystal material, and the liquid crystal composition is applicable to fast-response display modes such as VA, PSVA, IPS and NFFS.

The followings are preferred technical solutions of the present application, but not used as limitations of the technical solutions provided in the present application. The objections and beneficial effects of the present application can be better achieved and realized via the following preferred technical solutions.

C₁₋₁₂ as described in the present application can each be C₁, C₂, C₃, C₄, C₅, C₆, C₇, C₈, C₉, C₁₀, C₁₁ or C₁₂; C₁₋₃ as described can each be C₁, C₂ or C₃; C₁₋₅ as described can each be C₂, C₃, C₄ or C₅; the halogen as described comprises F, Cl, Br or I; the same meaning applies hereinafter when the same expression is involved; the "halogenated" as described represents that at least one -H in the group is substituted by halogen (-F, -Cl, -Br or -I); the same meaning applies hereinafter when the same expression is involved; in the present application, when n₂=2, two rings 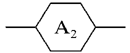 exist in the compound, these two 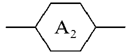 can have the same structures or have different structures, for example, one of those can be 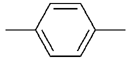 and the other can be 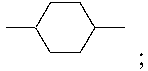 the same meaning applies when the expression "the same or different" is involved in the present application; in the present application, "can each be independently replaced by ..." means that it can be replaced or not, that is, both of being replaced and not being replaced fall in the protection scope of the present application; "can each be independently substituted by ..." has the same meaning; meanwhile, the position to be "replaced" or "substituted" is arbitrary; the short straight line on one or both sides of the group represents a connecting bond, rather than a methyl, for example, the short straight line on the left side of 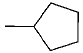 and the short lines on both sides of 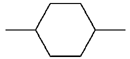 or

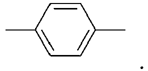

In some embodiments of the present application, G represents -O-or -S-.

In some embodiments of the present application, L₁ and L₂ represent -F.

In some embodiments of the present application, the compound of formula I is selected from a group consisting of the following compounds: 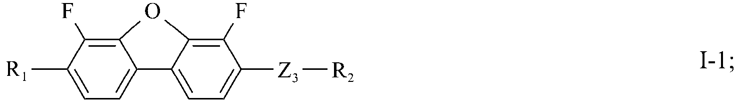 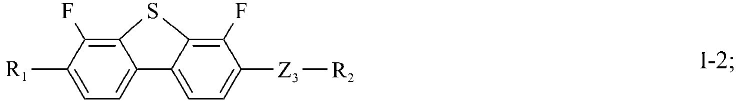 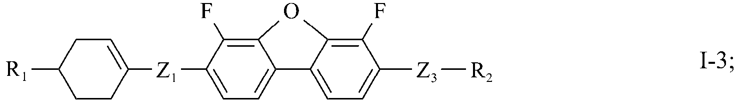 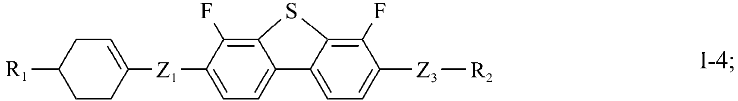 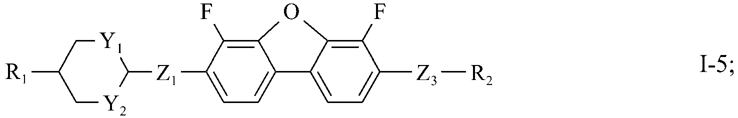 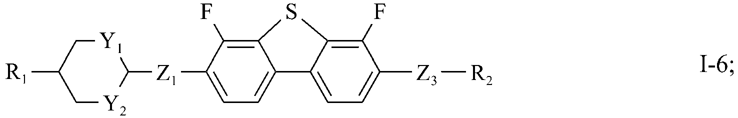 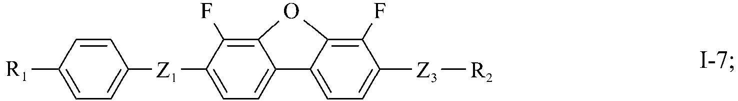 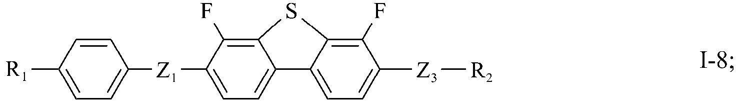 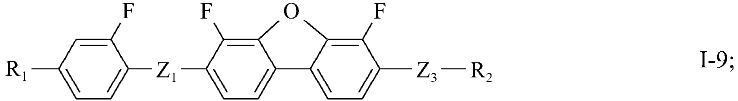 and 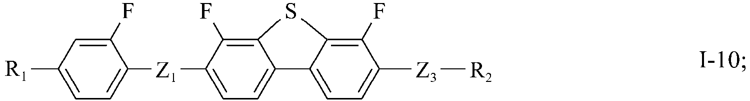
wherein, R₁, R₂ and Z₃ have the same limitation scopes as those in formula I;
Y₁, Y₂ each independently represents -O- or -CH₂-.

In some preferred embodiments of the present application, the compound of formula I is selected from at least one (for example, one, two, three, four or the like) from the group consisting of compound of formula I-1, compound of formula I-2: 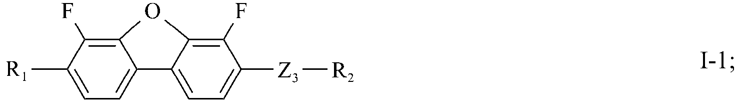 and

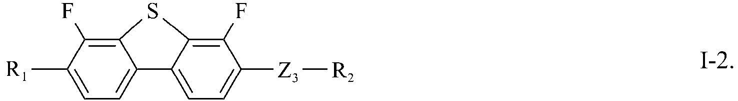

In some embodiments of the present application, R₁ represents C₁₋₈ (for example, C₁, C₂, C₃, C₄, C₅, C₆, C₇ or C₈) linear alkyl or C₁₋₆ (for example, C₁, C₂, C₃, C₄, C₅ or C₆) linear alkoxy, further preferably, C₁₋₆ linear alkoxy.

In some embodiments of the present application, Z₃ represents single bond, -O-, -OCH₂- or -OCH₂CH₂-.

In some embodiments of the present application, R₂ represents C₁₋₃ fluoroalkyl, 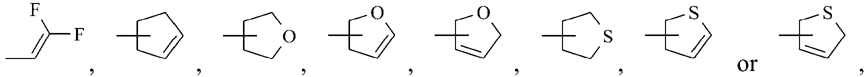 preferably, -CF₃, 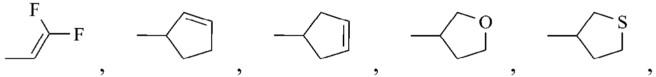 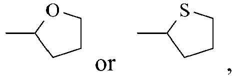 further preferably, -CF₃, 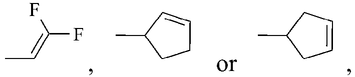 still further preferably,

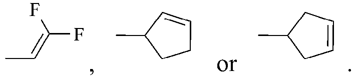

In some embodiments of the present application, the compound of formula I is selected from a group consisting of the following compounds: 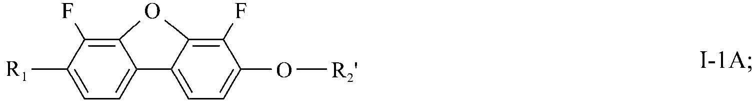 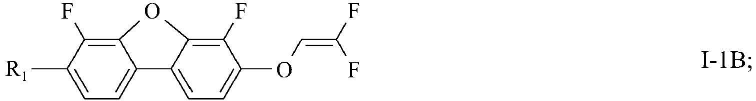 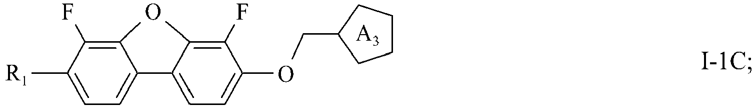 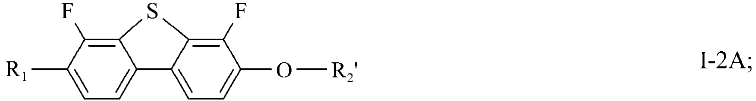 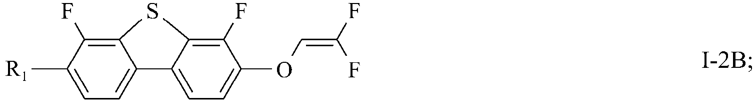 and 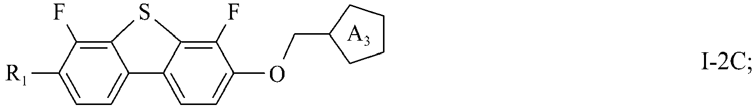
wherein, R₂' represents C₁₋₃ (for example, C₁, C₂ or C₃) halogenated liner alkyl, preferably, C₁₋₃ (for example, C₁, C₂ or C₃) liner fluoroalkyl, further preferably, -CF₃;
ring 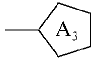 represents 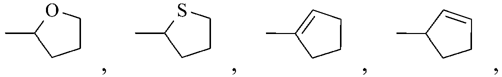 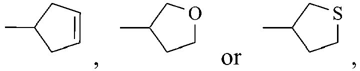 further preferably

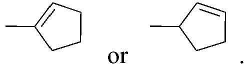

In some embodiments of the present application, the percentage by weight of the compound of formula I in the liquid crystal composition is 1%-30%, for example, it can be 3%, 5%, 6%, 8%, 10%, 12%, 15%, 18%, 20%, 22%, 25% , 28% or the like, preferably 2%-20%, further preferably 8%-16%.

In some embodiments of the present application, the percentage by weight of at least one (for example, one, two, three, four or the like) compound of formula I selected from the group consisting of compound of formula I-1, compound of formula I-2 is 1%-29%, for example, it can be 3%, 5%, 8%, 10%, 12%, 15%, 18%, 20%, 22%, 25%, 28%, 29% or the like, preferably 2%-20%.

In some embodiments of the present application, X represents -H, -OH, -O*, C₁₋₅ linear or branched alkyl, C₁₋₅ linear or branched alkoxy, or C₁₋₅ linear or branched acyl.

In some embodiments of the present application, X represents -H, -OH, -O*, -CH₃, -OCH₃ or -CO-CH₃.

In some embodiments of the present application, n represents an integer of 2-16, further preferably, an integer of 2-14.

In some embodiments of the present application, the stabilizer contains at least one selected from a group consisting of compound of formula II-3, compound of formula II-4.

In some embodiments of the present application, the stabilizer contains at least one selected from a group consisting of compound of formula II-1, compound of formula II-3.

In some embodiments of the present application, the stabilizer contains at least one selected from a group consisting of compound of formula II-1, compound of formula II-2, compound of formula II-3, compound of formula II-4, in which X represents -OH, -O*, -CH₃, -OCH₃ or -CO-CH₃.

In some embodiments of the present application, the percentage by weight of the stabilizer in the liquid crystal composition is 0.001%-0.1%, for example, it can be 0.002%, 0.003%, 0.005%, 0.008%, 0.01%, 0.02%, 0.03%, 0.04%, 0.05%, 0.06%, 0.07%, 0.08%, 0.09% or the like, preferably, 0.002%-0.05%.

In some embodiments of the present application, the liquid crystal composition further comprises at least one compound of formula N: 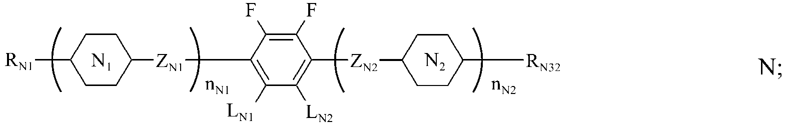
wherein, R_{N1} and R_{N2} each independently represents C₁₋₁₂ (for example, C₁, C₂, C₃, C₄, C₅, C₆, C₇, C₈, C₉, C₁₀, C₁₁ or C₁₂) linear or branched alkyl, 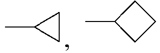 or 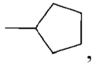 one or at least two nonadjacent -CH₂- in the C₁₋₁₂ linear or branched alkyl can each be independently replaced by -CH=CH-, -C≡C-, -O-, -CO-, -CO-O- or -O-CO-;
ring 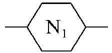 and ring 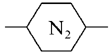 each independently represents 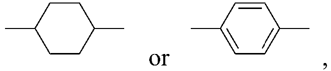 wherein one or at least two -CH₂- in 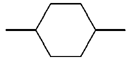 can be replaced by -O-, one or at most two single bonds in the rings can be replaced by double bond; wherein one or at least two -H in 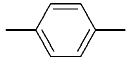 can each be independently substituted by -F, -Cl or -CN, one or at least two -CH= in the rings can be replaced by -N=;
L_{N1} and L_{N2} each independently represents -H, halogen, C₁₋₃ (for example, C₁, C₂ or C₃) linear or branched alkyl, C₁₋₃ (for example, C₁, C₂ or C₃) linear or branched alkoxy;
Z_{N1} and Z_{N2} each independently represents single bond, -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-;
n_{N1} represents 0, 1, 2 or 3, n_{N2} represents 0 or 1, and 0≤n_{N1}+n_{N2}≤3;
when n_{N1} represents 2 or 3, ring 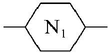 can be the same or different, Z_{N1} can be the same or different.

In some embodiments of the present application, the compound of formula N is selected from a group consisting of the following compounds: 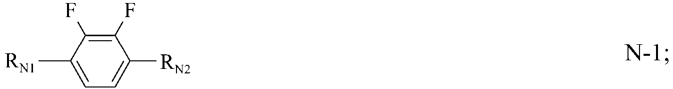 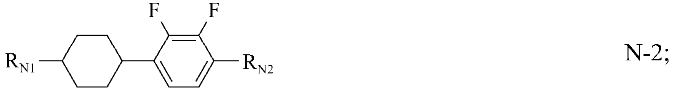 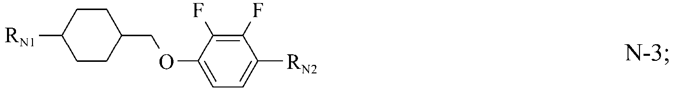 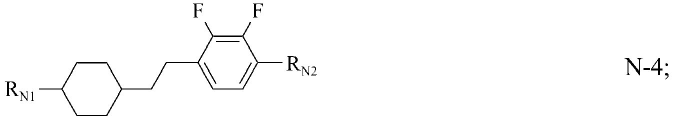 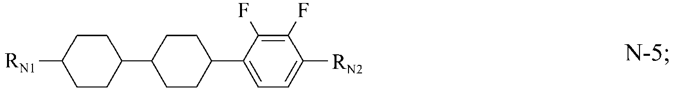 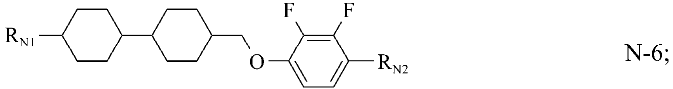 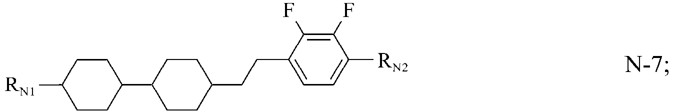 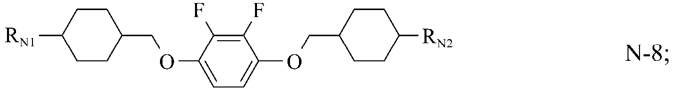 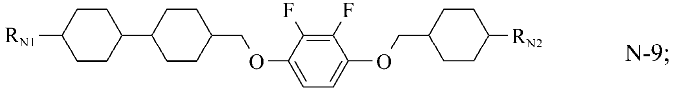 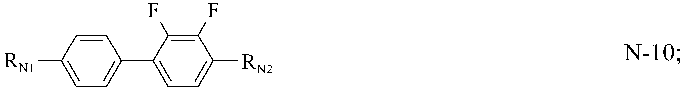 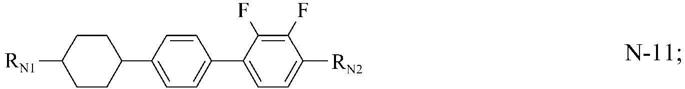 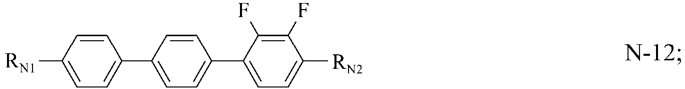 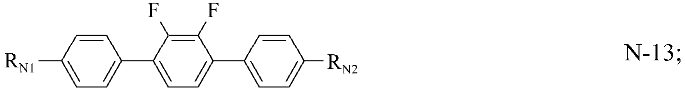 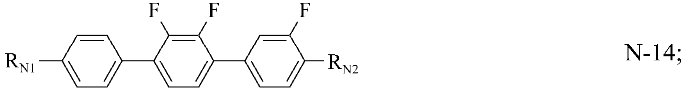 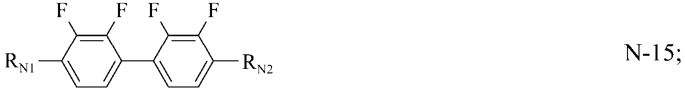 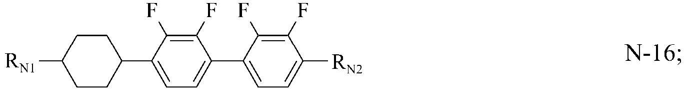 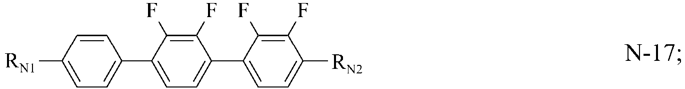 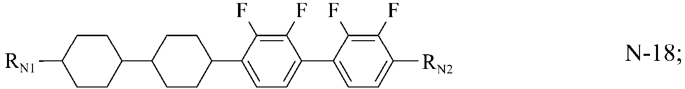 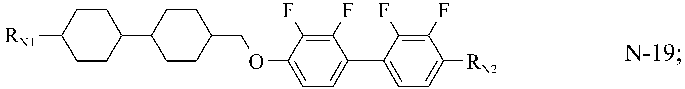 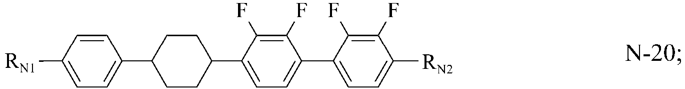 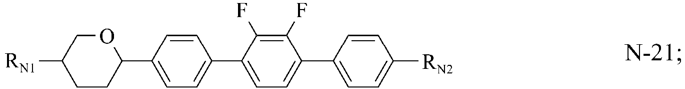 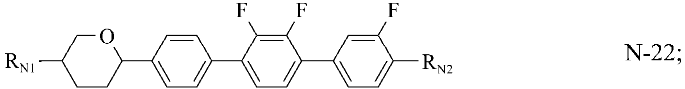 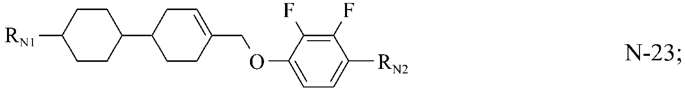 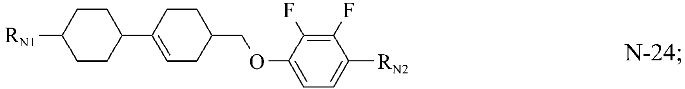 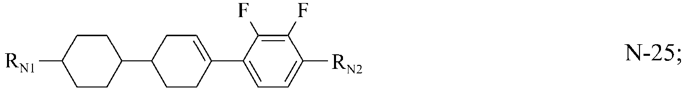 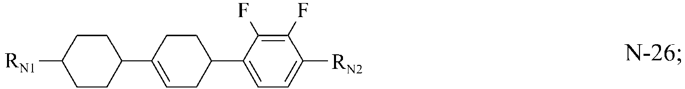 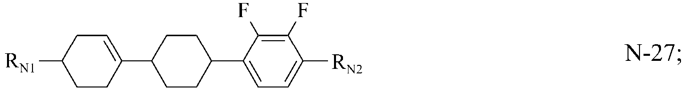 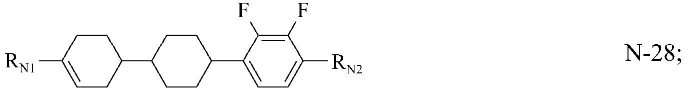 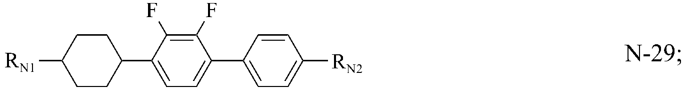 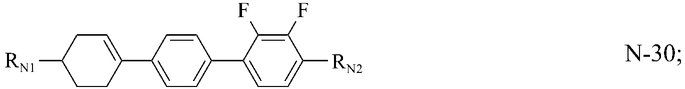 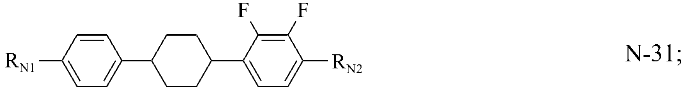 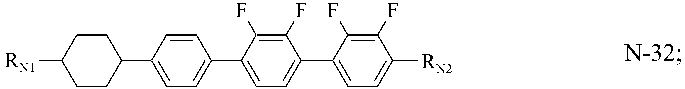 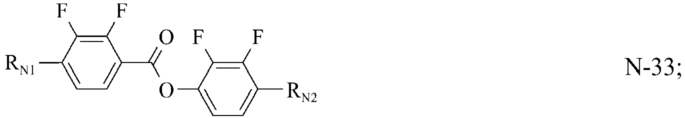 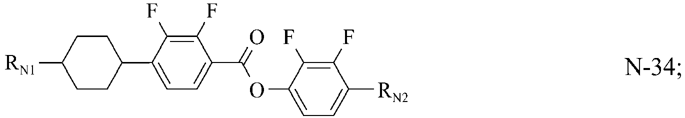 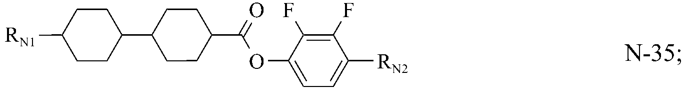 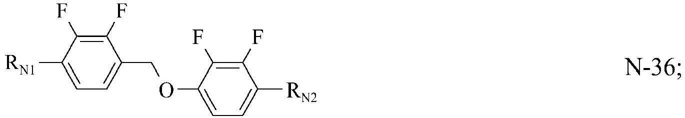 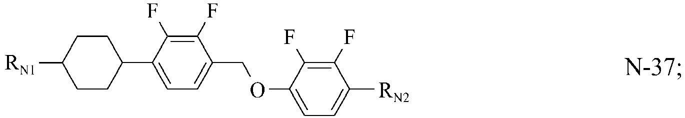 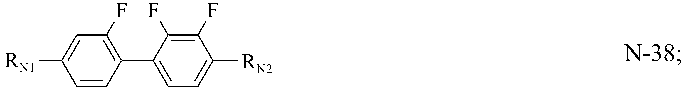 and 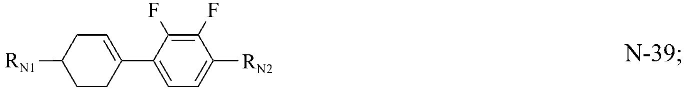 wherein, R_{N1} and R_{N2} have the same limitation scopes as those in formula N.

In some embodiments of the present application, R_{N1} and R_{N2} each independently represents C₁₋₁₀ (for example, C₁, C₂, C₃, C₄, C₅, C₆, C₇, C₈, C₉ or C₁₀) linear alkyl, C₁₋₉ (for example, C₁, C₂, C₃, C₄, C₅, C₆, C₇, C₈ or C₉) linear alkoxy or C₂₋₉ (for example, C₂, C₃, C₄, C₅, C₆, C₇, C₈ or C₉) linear alkenyl.

In some embodiments of the present application, R_{N2} represents C₁₋₉ linear alkoxy.

In some preferred embodiments of the present application, the compound of formula N contains at least one (for example, 1, 2, 3, 4, 5, 6, 7, 8, 10, 12, 14, 16 or the like) selected from a group consisting of compound of formula N-2, compound of formula N-3, compound of formula N-5, compound of formula N-6, compound of formula N-10, compound of formula N-11, compound of formula N-12, compound of formula N-25, compound of formula N-29.

In some preferred embodiments of the present application, the compound of formula N contains at least one (for example, 1, 2, 3 or the like) compound of formula N-12.

In some preferred embodiments of the present application, the compound of formula N contains at least one (for example, 1, 2, 3, 4, 5 or the like) selected from a group consisting of compound of formula N-3, compound of formula N-6.

In some embodiments of the present application, the percentage by weight of the compound of formula N in the liquid crystal composition is 1%-75%, for example, it can be 5%, 8%, 10%, 12%, 15%, 18%, 20%, 22%, 25%, 28%, 30%, 35%, 38%, 38.5%, 40%, 45%, 47.5%, 48.5%, 49%, 49.5%, 50%, 51%, 51.5%, 55%, 58%, 60%, 65%, 68%, 70%, 73% or the like, further preferably, 20%-65%.

In some embodiments of the present application, the percentage by weight of at least one (for example, 1, 2, 3, 4, 5, 6, 7, 8, 10, 12, 14, 16 or the like) compound of formula N selected from the group consisting of compound of formula N-2, compound of formula N-3, compound of formula N-5, compound of formula N-6, compound of formula N-10, compound of formula N-11, compound of formula N-12, compound of formula N-25, compound of formula N-29 is 1%-73%, for example, it can be 5%, 8%, 10%, 12%, 15%, 18%, 20%, 22%, 25%, 28%, 30%, 35%, 38%, 38.5%, 40%, 45%, 47.5%, 48.5%, 49%, 49.5%, 50%, 51%, 51.5%, 55%, 58%, 60%, 65%, 70%, 73% or the like, further preferably, 20%-65%.

In some embodiments of the present application, the liquid crystal composition further comprises at least one compound of formula M: 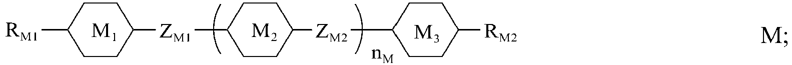
wherein, R_{M1} and R_{M2} each independently represents C₁₋₁₂ (for example, C₁, C₂, C₃, C₄, C₅, C₆, C₇, C₈, C₉, C₁₀, C₁₁ or C₁₂) linear or branched alkyl, 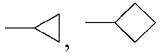 or 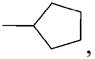 one or at least two nonadjacent -CH₂- in the C₁₋₁₂ linear or branched alkyl can each be independently replaced by -CH=CH-, -C≡C-, -O-, -CO-, -CO-O- or -O-CO-;
ring 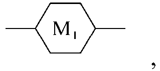 ring 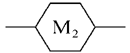 and ring 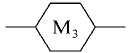 each independently represents 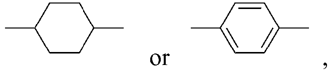 one or at least two -CH₂-in the 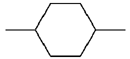 can be replaced by -O-, one or at most two single bonds in the rings can be replaced by double bond; at most one -H in the 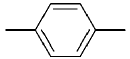 can be substituted by halogen;
Z_{M1} and Z_{M2} each independently represents single bond, -CO-O-, -O-CO-, -CH₂O-, -OCH₂-, -CH=CH-, -CH₂CH₂- or -(CH₂)₄-;
n_{M1} represents 0, 1, 2 or 3, wherein when n_{M1}=2 or 3, ring 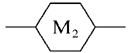 can be the same or different, Z_{M2} can be the same or different.

In some embodiments of the present application, the compound of formula M is selected from a group consisting of the following compounds: 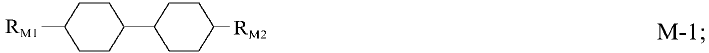 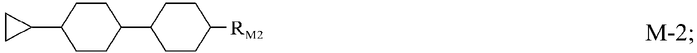 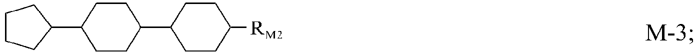 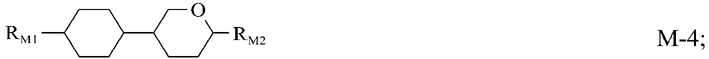 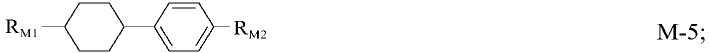 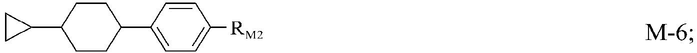 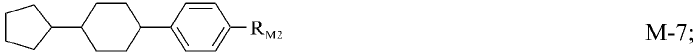 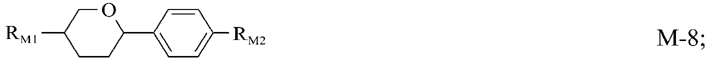 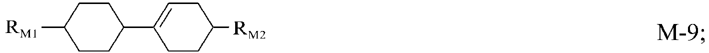 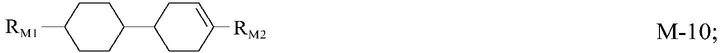 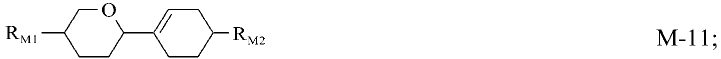 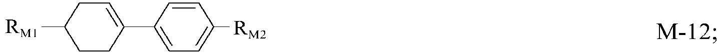 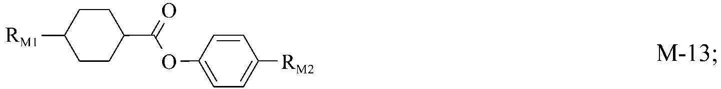 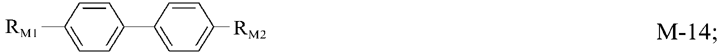 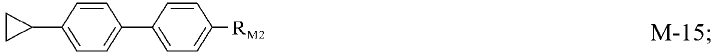 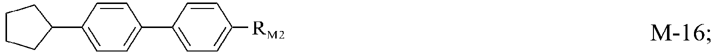 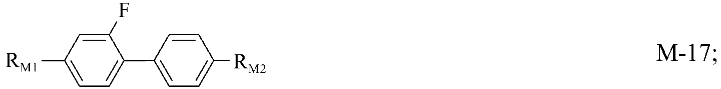 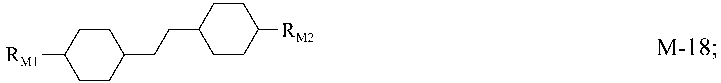 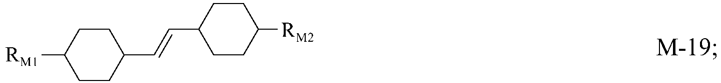 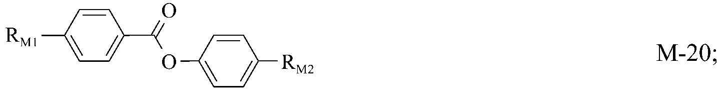 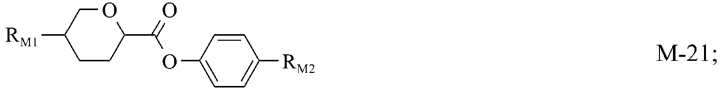 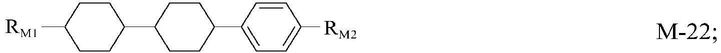 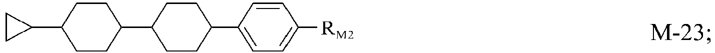 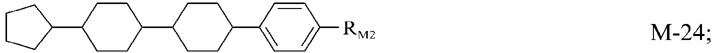 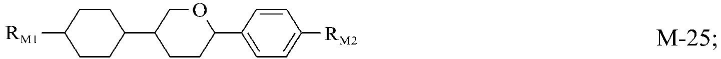 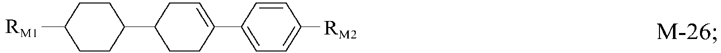 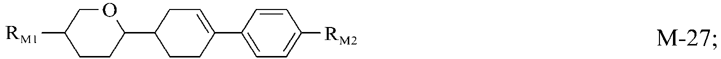 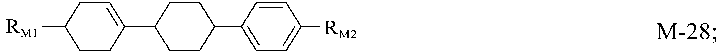 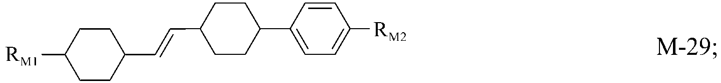 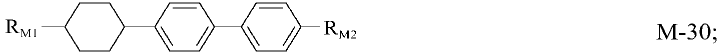 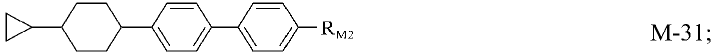 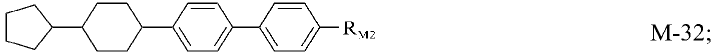 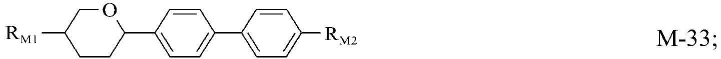 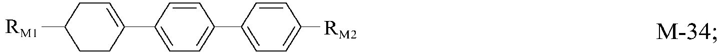 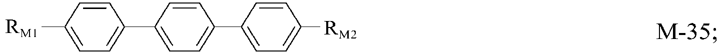 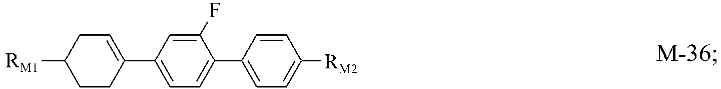 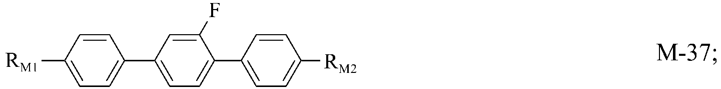 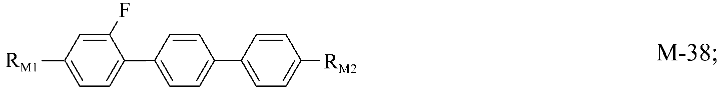 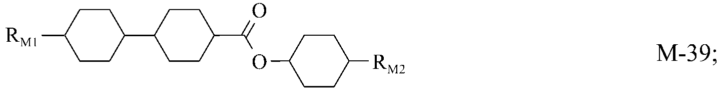 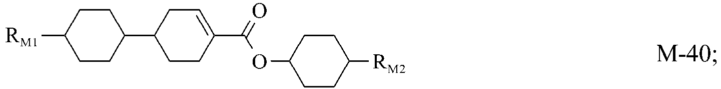 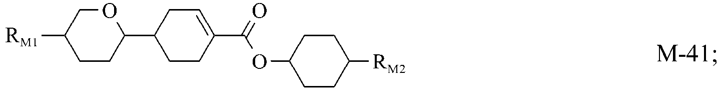 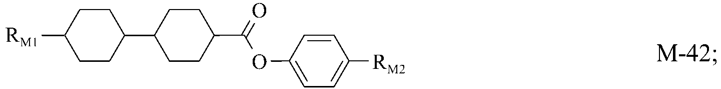 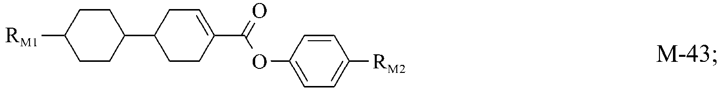 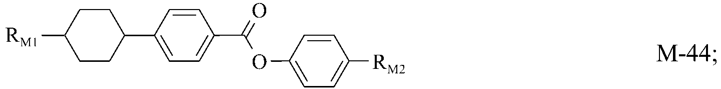 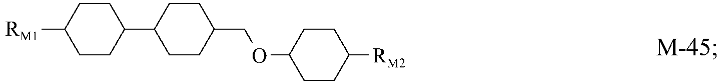 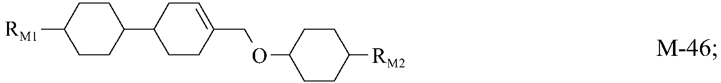 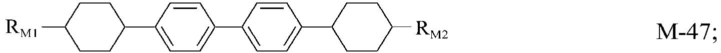 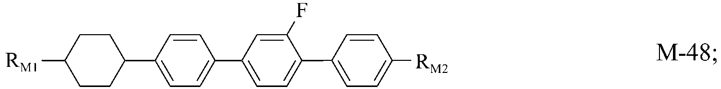 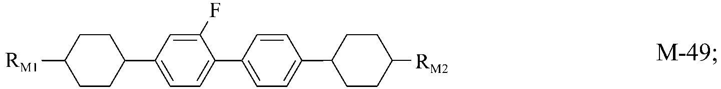 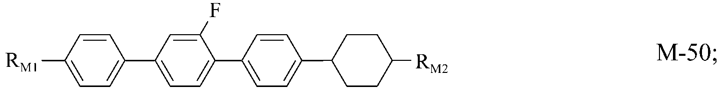 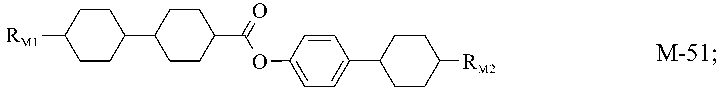 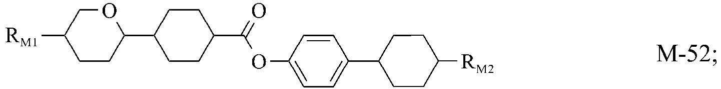 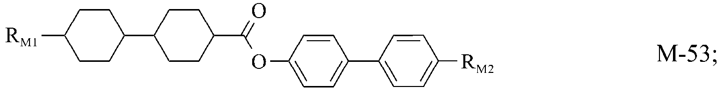 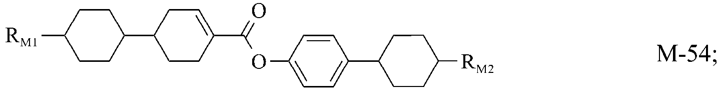 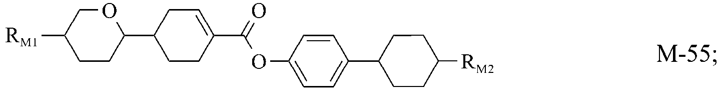 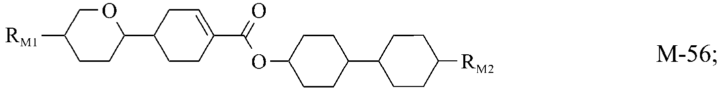 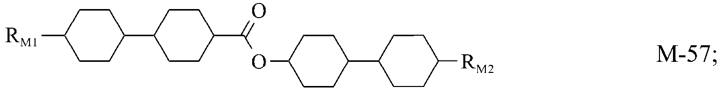 and 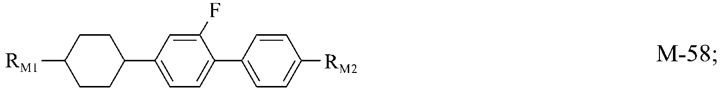 wherein, R_{M1} and R_{M2} each independently represents C₁₋₁₀ (for example, C₁, C₂, C₃, C₄, C₅, C₆, C₇, C₈, C₉ or C₁₀) linear or branched alkyl, one or more than two nonadjacent -CH₂- in the C₁₋₁₀ linear or branched alkyl can each be independently replaced by -CH=CH-, -C≡C-, -O-, -CO-, -CO-O- or -O-CO-.

In some embodiments of the present application, R_{M1} and R_{M2} each independently represents C₁₋₁₀ (for example, C₁, C₂, C₃, C₄, C₅, C₆, C₇, C₈, C₉ or C₁₀) linear alkyl, C₁₋₉ (for example, C₁, C₂, C₃, C₄, C₅, C₆, C₇, C₈ or C₉) linear alkoxy or C₂₋₉ (for example, C₂, C₃, C₄, C₅, C₆, C₇, C₈ or C₉) linear alkenyl, preferably, C₁₋₁₀ linear alkyl or C₂₋₉ linear alkenyl.

In some embodiments of the present application, the compound of formula M contains at least one (for example, 1, 2, 3, 4, 5, 6 or the like) selected from a group consisting of compound of formula M-1, compound of formula M-14, compound of formula M-22, compound of formula M-29, compound of formula M-30, compound of formula M-37, compound of formula M-45.

In some embodiments of the present application, the compound of formula M is selected from a group consisting of the following compounds: 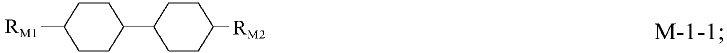 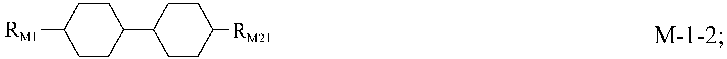 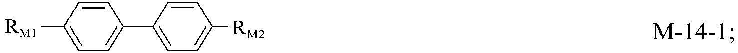 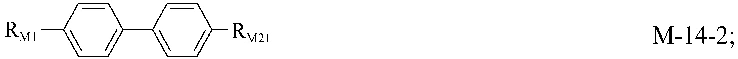 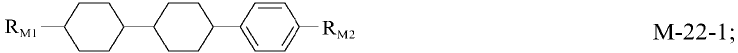 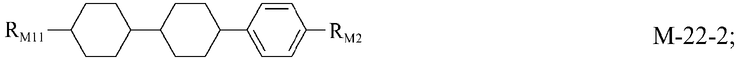 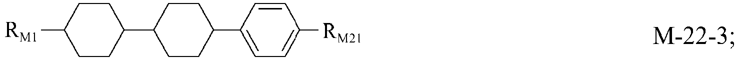 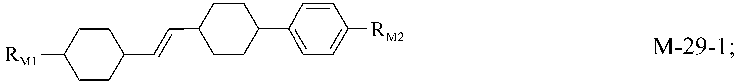 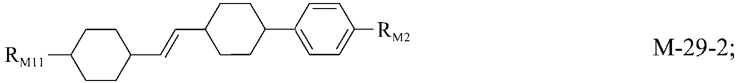 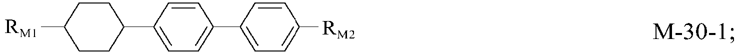 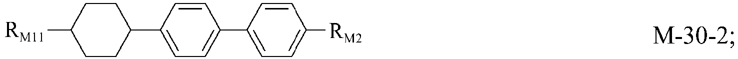 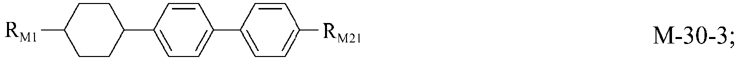 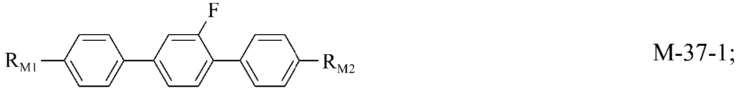 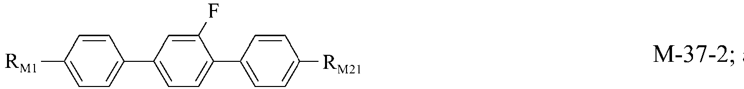 and 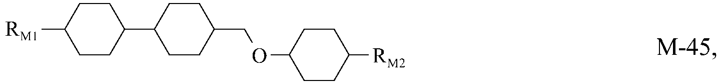 wherein,
R_{M11} and R_{M21} each independently represents C₂₋₈ (for example, C₂, C₃, C₄, C₅, C₆, C₇ or C₈) linear alkenyl;
R_{M1} and R_{M2} each independently represents C₁₋₁₀ (for example, C₁, C₂, C₃, C₄, C₅, C₆, C₇, C₈, C₉ or C₁₀) linear alkyl, or C₁₋₉ (for example, C₁, C₂, C₃, C₄, C₅, C₆, C₇, C₈ or C₉) linear alkoxy.

The alkenyl group in the present application is preferably a group represented by any one of formula (V1) to formula (V9), particularly preferably, formula (V1), formula (V2), formula (V8) or formula (V9). The groups represented by formula (V1) to formula (V9) are shown as follows: 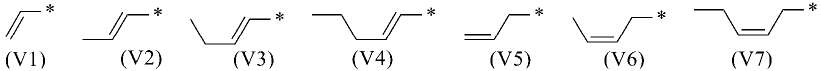 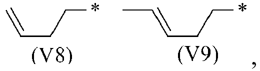 wherein, "*" represents the carbon atom bound in the ring structure.

In some embodiments of the present application, the percentage by weight of the compound of formula M in the liquid crystal composition is 1%-80%, for example, it can be 2%, 5%, 8%, 10%, 12%, 15%, 18%, 20%, 25%, 28%, 30%, 35%, 38%, 38.5%, 39%, 40%, 41.5%, 42%, 43.5%, 45%, 50%, 52%, 55%, 58%, 60%, 62%, 65%, 68%, 70%, 75% or the like, further preferably, 15%-50%.

In some embodiments of the present application, the percentage by weight of at least one (for example, 1, 2, 3, 4, 5, 6 or the like) compound of formula M selected from the group consisting of compound of formula M-1, compound of formula M-14, compound of formula M-22, compound of formula M-29, compound of formula M-30, compound of formula M-37, compound of formula M-45 is 1%-75%, for example, it can be 2%, 5%, 8%, 10%, 12%, 15%, 18%, 20%, 25%, 28%, 30%, 35%, 38%, 38.5%, 39%, 40%, 41.5%, 42%, 43.5%, 45%, 50%, 52%, 55%, 58%, 60%, 62%, 65%, 68%, 70%, 75% or the like, further preferably, 15%-50%.

Other than the above compounds, the liquid crystal composition of the present application may contain any one or the combination of at least two of conventional nematic liquid crystal, smectic liquid crystal, cholesteric liquid crystal, polymerizable monomer or additive.

In a preferred embodiment, the liquid crystal composition further comprises at least one additive.

In a preferred embodiment, the additive comprises any one or the combination of at least two of dopants, antioxidant, ultraviolet absorber, infrared absorber, or other light stabilizers.

It should be noted that said other light stabilizers represent light stabilizers other than compound of formula II-1, compound of formula II-2, compound of formula II-3, compound of formula II-4.

Dopants may be preferably added in the liquid crystal composition of the present application are shown as follows: 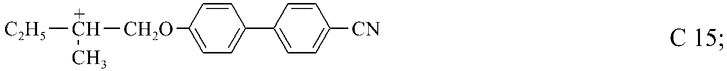 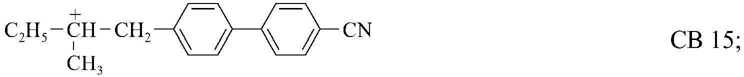 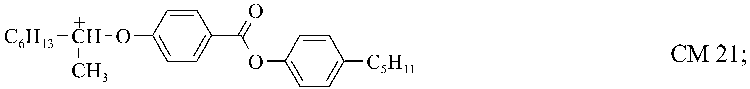 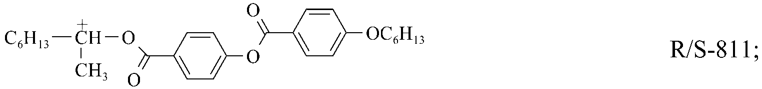 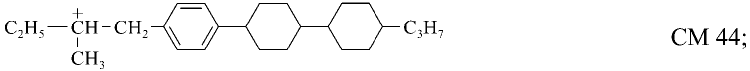 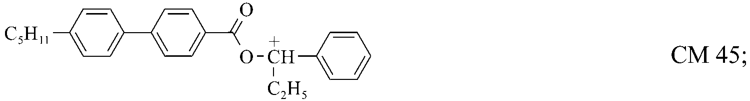 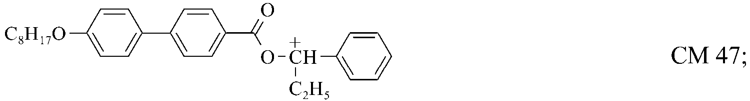 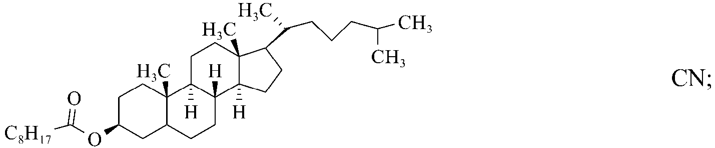 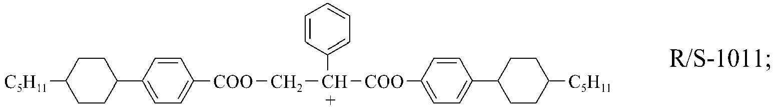 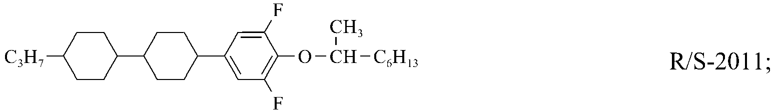 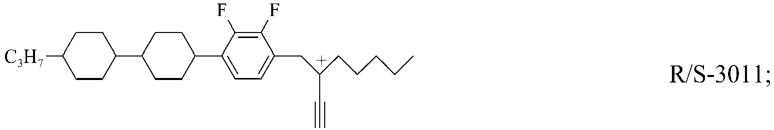 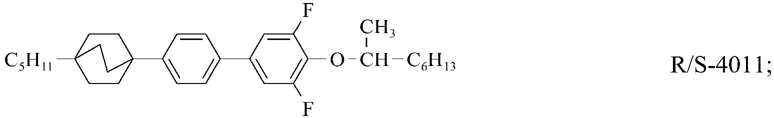 and 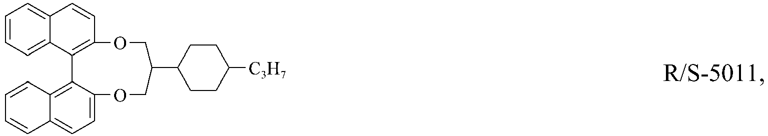 wherein, "+" represents a chiral site.

In some embodiments of the present application, the percentage by weight of dopants in the liquid crystal composition is 0%-5%; preferably, the percentage by weight of dopants in the liquid crystal composition is 0.01%-1%.

Further, additives such as antioxidant, other light stabilizers or the like used in the liquid crystal composition of the present application are preferably the following substance: 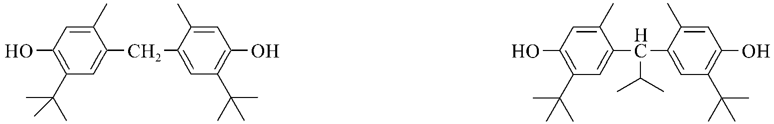 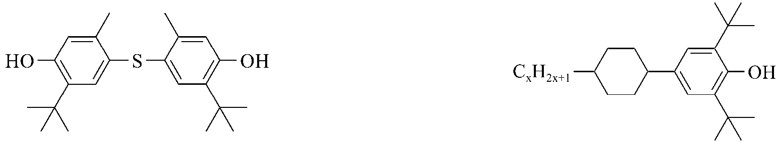 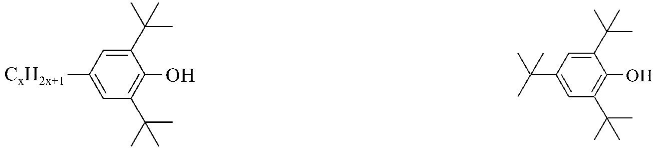 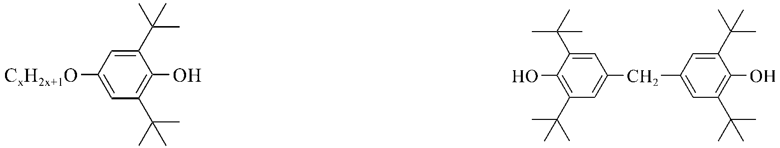 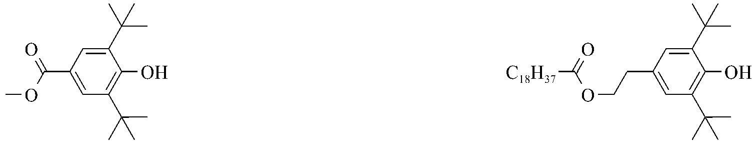 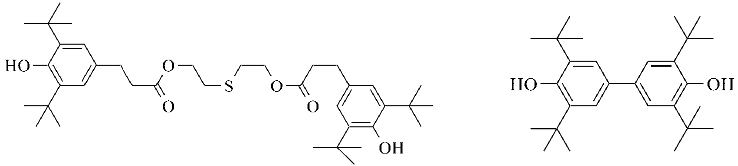 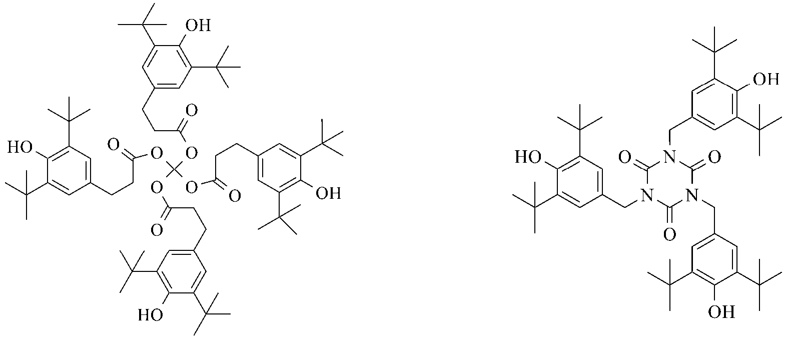 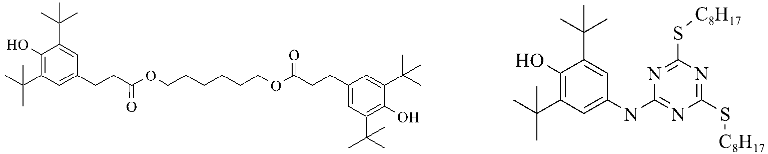 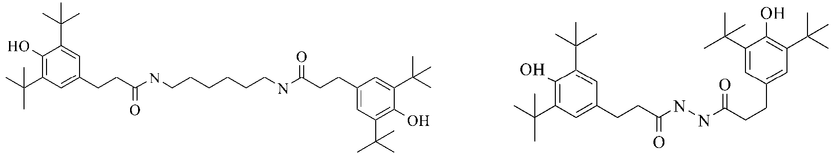 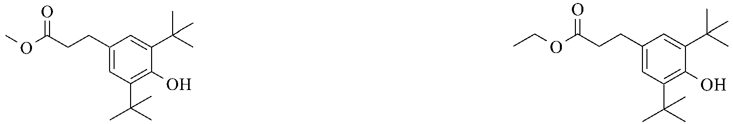 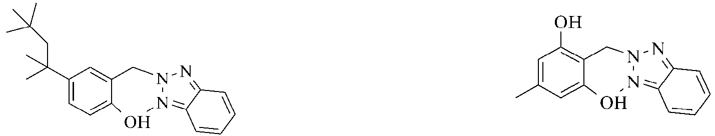 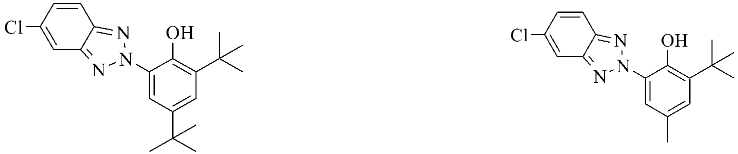 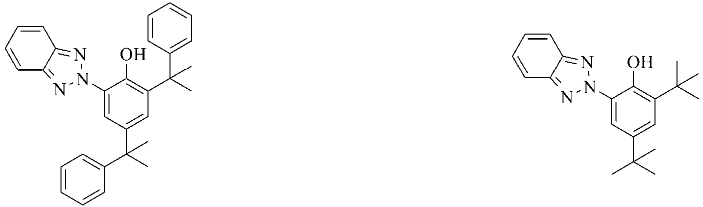 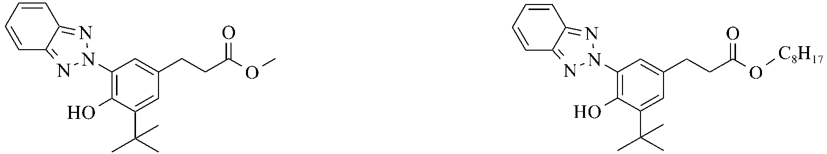 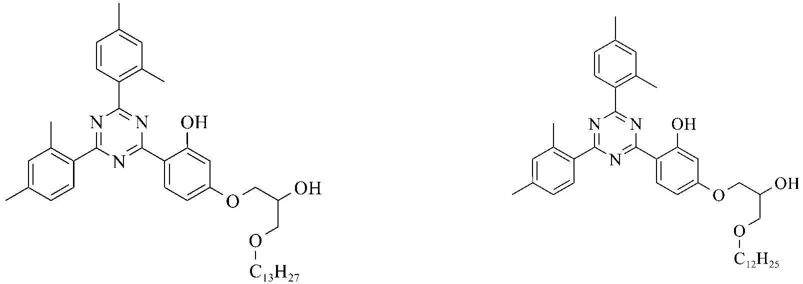 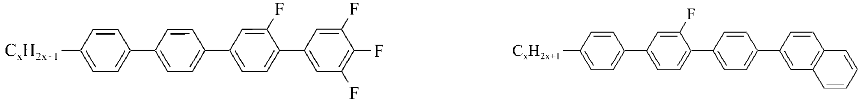 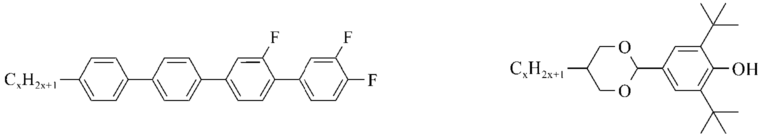 wherein, x represents a positive integer of 1-12.

For example, other light stabilizers are selected from light stabilizers as shown below:

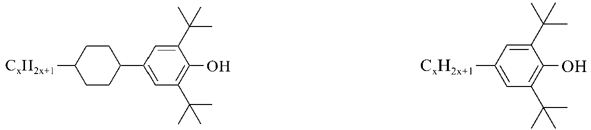

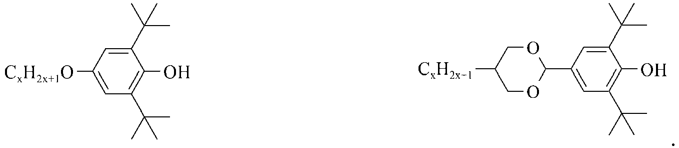

In some embodiments of the present application, the percentage by weight of other light stabilizers in the liquid crystal composition is 0%-5%; preferably, the percentage by weight of other light stabilizers in the liquid crystal composition is 0.01%-1%, further preferably, 0.01%-0.1%.

In the second aspect, the present application provides a liquid crystal display device, and the liquid crystal display device comprises the liquid crystal composition as stated in the first aspect.

In a preferred embodiment, the liquid crystal display device is any one of VA display mode, PSVA display mode, IPS display mode and NFFS display mode.

Compared with the related technics, the present application has the following beneficial effects:
In the liquid crystal composition as provided in the present application, by means of compounding the stabilizer having a specific structure with the compound of formula I having a dibenzo structure, the liquid crystal composition has relatively high elastic constants K₁₁ and K₃₃, a relatively small rotational viscosity γ₁, a relatively short response time RT, a relatively high response speed, a relatively high transmittance Tr, a relatively high contrast ratio CR and a relatively good low-temperature storage stability while an appropriate clearing point, an appropriate optical anisotropy and an appropriate dielectric anisotropy are maintained. The liquid crystal composition has a wider nematic phase temperature range, and the image sticking retention is reduced or the dissipation of the image retention is accelerated. The liquid crystal composition has a higher voltage holding ratio VHR, which facilitates the improvement of the overall use effect of a liquid crystal material, and the liquid crystal composition is applicable to fast-response display modes such as VA, PSVA, IPS and NFFS.

Other aspects would be clear after reading and understanding the detailed description.

### Detailed Embodiments

The technical solution of the present application will be further illustrated by the detailed embodiments below. It should be clear for the person skilled in the art that, the Examples are only used to help to understand the present application, and shall not be deemed as specific limitations on the present application.

For the convenience of the expression, in the following Examples and Comparative Examples, the group structures of the components in the liquid crystal composition are represented by the codes listed in Table 1:

**Table 1**

| Structure of group | Code | Name of group | Structure of group | Code | Name of group |
|---|---|---|---|---|---|
| 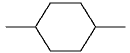 | C | 1,4-cyclohex ylidene | 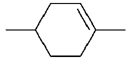 | L | 1, 4-cyclohexe ne |
| 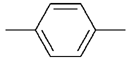 | P | 1,4-phenylen e | 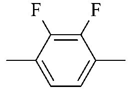 | W | 2,3-difluoro-1,4-phenyle ne |
| 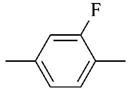 | G | 2-fluoro-1,4-phenylene | 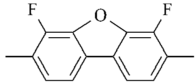 | B(O) | 4,6-difluoro-dibenzo[b,d] furan-3,7-di yl |
| -CH₂O-/-O CH₂- | 1O/O1 | methyleneox y | 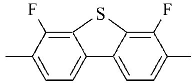 | B(S) | 4,6-difluoro-dibenzo[b,d] thiophene-3, 7-diyl |
| -O- | O | oxygen bridge | -CₙH₂ₙ₊₁ or -CₙH₂ₙ- | n (n represent s a positive integer of 1-12) | liner alkyl or liner alkylene |
| 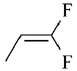 | V(2F) | difluoroenyl | -CH=CH- or -CH=CH₂ | V | ethenylene or ethenyl |
| 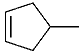 | ((C5)(V )) | cyclopenteny 1 | 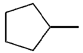 | (C5) | 1-cyclopent yl |

Taking the compound with the following structural formula as an example: 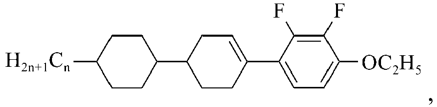 represented by the codes listed in Table 1, this structure can be expressed as: nCLWO2, wherein, C represents 1,4-cyclohexylidene, L represents 1, 4-cyclohexene, W represents 2,3-difluoro-1,4-phenylene, n represents the number of the carbon atoms of the alkyl on the left, for example, n is "3" means that the alkyl is a n-propyl, and OC₂H₅ represents an ethoxy.

In the following Examples and Comparative Examples, the abbreviated codes of test items are as followings:
- Cp: clearing point (nematic-isotropy phases transition temperature, °C)
- Δn: optical anisotropy (589 nm, 25°C)
- Δε: dielectric anisotropy (1 KHz, 25°C)
- K₁₁: splay elastic constant (25°C)
- K₃₃: bend elastic constant (25°C)
- γ₁: rotational viscosity (mPa•s, 25°C)
- Tr: transmittance (%) contrast rate (transmittance in a bright state/transmittance in a dark
- CR: state, 25°C)
- RT: response time (ms)
- LTS(-40°C): low-temperature storage time (-40°C, h)
- IS: dissipating time of image retention (min)
dissipating
time
wherein: Cp: tested by a MP70 melting point apparatus;
Δn: Δn=nₑ-nₒ, tested using an Abbe Refractometer under a sodium lamp (589 nm) as light source, at 25°C;
Δε: Δε=ε_{∥}-ε_{⊥}, wherein, ε_{∥} is the dielectric constant parallel to the molecular axis, ε _{⊥} is the dielectric constant perpendicular to the molecular axis, test conditions: 25°C, 1 KHz, test cell is a VA cell with a cell gap of 6 µm;
K₁₁ and K₃₃: obtained via testing the C-V curves of liquid crystal by a LCR meter and VA test cell and calculating; test conditions: 6 µm VA test cell, V=0.1-20 V;
γ₁: tested using a LCM-2 type liquid crystal physical property evaluation system; test conditions: 25°C, 160-240 V, the cell gap for test is 20 µm;
Tr: using a DMS 505 photoelectric integrated tester to test the V-T curve of dimming device, taking the maximum value of transmittance on the V-T curve as the transmittance of the liquid crystal, the test cell is negative FFS cell and the cell gap is 3 µm;
RT: tested using a DMS 505 tester at 25°C, test conditions: 25°C, V90 drive, negative FFS test cell with a cell gap of 3 µm;
CR: testing the transmittance of the liquid crystal cell at a 255 gray level voltage and a 0 gray level voltage separately with a DMS 505 tester, that is, Tᵣ₂₅₅ and Tᵣ₀, and obtained via Tᵣ₂₅₅/Tᵣ₀, test conditions: 25°C, negative FFS-type test cell with a cell gap of 3 µm;
LTS(-40°C): nematic phase liquid crystal medium is placed in a glass bottle and stored at a constant temperature of -40°C, the time recorded when crystal precipitation is observed;
IS dissipating time:
   Continuously applying a supersaturated voltage (13 V) for 2 h on a FFS cell, followed by an L₆₄ gray level voltage with a DMS 505 photoelectric integrated tester, from this point, starting to read and record the brightness values at regular time intervals, and a time- brightness curve L-t1 is obtained. Continuously applying a low voltage (0.1 V) for 2 h on another FFS cell, followed by an L₆₄ gray level voltage, from this point, starting to read and record the brightness values at regular time intervals, and a time- brightness curve L-t2 is obtained. The difference between the two curves, L-t1 and L-t2, is then calculated to obtain the relative afterimage dissipating curve △L-t. The moment when △L becoming zero is considered as the point where the afterimage is completely faded; the time t at this point is recorded as the IS dissipating time, in which the cell gap of the FFS cell is 3 µm.

The compounds used in the following Examples and Comparative Example can either be synthesized by methods known in the art or be obtained commercially. The synthetic techniques are conventional, and each of the obtained liquid crystal compositions is tested and meets the standards of electronic compound.

The liquid crystal compositions are prepared in accordance with the proportions of each of the liquid crystal compositions in the following Examples. The preparation of the liquid crystal compositions is carried out according to the conventional methods in the art, such as mixed and prepared according to the stated ratios by means of heating, ultrasonic processing, suspending and so forth.

### Comparative Example 1

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.11 |
| 3C1OWO2 | N-3 | 3 | Cp | 75 |
| 2CCWO2 | N-5 | 7 | Δε | -3.4 |
| 3CCWO2 | N-5 | 7 | K₁₁ | 13.5 |
| 3CC1OWO2 | N-6 | 2 | K33 | 15.2 |
| 3CPWO4 | N-11 | 5 | γ₁ | 74 |
| 3CPWO2 | N-11 | 5 | RT | 24.62 |
| 3CLWO2 | N-25 | 7 | Tr | 14.90 |
| 3PWO2 | N-10 | 11 | CR | 1212 |
| 3CCV | M-1-2 | 29 | LTS (-40°C) | 168 |
| 3CCV1 | M-1-2 | 4 | IS dissipating time | 19.3 |
| 1PP2V | M-14-2 | 5.5 | | |
| 3PPWO4 | N-12 | 1.5 | | |
| 3PPWO2 | N-12 | 1.5 | | |
| 5PPWO2 | N-12 | 1.5 | | |

### Comparative Example 2

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.109 |
| 3C1OWO2 | N-3 | 3 | Cp | 74 |
| 2CCWO2 | N-5 | 7 | Δε | -3.6 |
| 3CCWO2 | N-5 | 7 | K₁₁ | 14.8 |
| 3CC1OWO2 | N-6 | 2 | K33 | 16.4 |
| 3CPWO2 | N-11 | 5 | γ₁ | 75 |
| 3CLWO2 | N-25 | 7 | RT | 22.92 |
| 3PWO2 | N-10 | 6 | Tr | 14.80 |
| 3CCV | M-1-2 | 29 | CR | 1380 |
| 3CCV1 | M-1-2 | 4 | LTS (-40°C) | 192 |
| 1PP2V | M-14-2 | 5.5 | IS dissipating time | 22.1 |
| 3PPWO4 | N-12 | 1.5 | | |
| 3PPWO2 | N-12 | 1.5 | | |
| 5PPWO2 | N-12 | 1.5 | | |
| 4OB(S)O1((C5)(V)) | I-2 | 5 | | |
| 2OB(S)O1((C5)(V)) | I-2 | 5 | | |

### Comparative Example 3

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.109 |
| 3C1OWO2 | N-3 | 3 | Cp | 74 |
| 2CCWO2 | N-5 | 7 | Δε | -3.6 |
| 3CCWO2 | N-5 | 7 | K₁₁ | 14.4 |
| 3CC1OWO2 | N-6 | 2 | K33 | 15.8 |
| 3CPWO2 | N-11 | 5 | γ₁ | 75 |
| 3CLWO2 | N-25 | 7 | RT | 23.56 |
| 3PWO2 | N-10 | 6 | Tr | 14.70 |
| 3CCV | M-1-2 | 29 | CR | 1321 |
| 3CCV1 | M-1-2 | 4 | LTS (-40°C) | 144 |
| 1PP2V | M-14-2 | 5.5 | IS dissipating time | 18.6 |
| 3PPWO4 | N-12 | 1.5 | | |
| 3PPWO2 | N-12 | 1.5 | | |
| 5PPWO2 | N-12 | 1.5 | | |
| 4OB(S)O2 | | 5 | | |
| 5OB(S)O2 | | 5 | | |
| Stabilizer II-2, n=8, X is -O* | | 0.003 | | |

Wherein, the amount of stabilizer is calculated based on taking the amounts of other liquid crystal components as 100%. Taking Comparative Example 3 as an example, the total amount of other liquid crystal components is 100%, and the addition amount of the stabilizer is 0.003%; the same notation applies to following Examples or Comparative Examples involving stabilizers, and will not be repeated.

### Example 1

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.109 |
| 3C1OWO2 | N-3 | 3 | Cp | 74 |
| 2CCWO2 | N-5 | 7 | Δε | -3.6 |
| 3CCWO2 | N-5 | 7 | K₁₁ | 14.8 |
| 3CC1OWO2 | N-6 | 2 | K33 | 16.4 |
| 3CPWO2 | N-11 | 5 | γ₁ | 75 |
| 3CLWO2 | N-25 | 7 | RT | 22.92 |
| 3PWO2 | N-10 | 6 | Tr | 14.80 |
| 3CCV | M-1-2 | 29 | CR | 1380 |
| 3CCV1 | M-1-2 | 4 | LTS (-40°C) | 216 |
| 1PP2V | M-14-2 | 5.5 | IS dissipating time | 14.8 |
| 3PPWO4 | N-12 | 1.5 | | |
| 3PPWO2 | N-12 | 1.5 | | |
| 5PPWO2 | N-12 | 1.5 | | |
| 4OB(S)O1((C5)(V)) | I-2 | 5 | | |
| 2OB(S)O1((C5)(V)) | I-2 | 5 | | |
| Stabilizer II-1, n=4, X is -O* | | 0.003 | | |

### Example 2

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.109 |
| 3C1OWO2 | N-3 | 3 | Cp | 74 |
| 2CCWO2 | N-5 | 7 | Δε | -3.6 |
| 3CCWO2 | N-5 | 7 | K₁₁ | 15.1 |
| 3CC1OWO2 | N-6 | 2 | K33 | 16.3 |
| 3CPWO2 | N-11 | 4 | γ₁ | 76 |
| 3CLWO2 | N-25 | 7 | RT | 22.65 |
| 3PWO2 | N-10 | 5 | Tr | 14.60 |
| 3CCV | M-1-2 | 29 | CR | 1393 |
| 3CCV1 | M-1-2 | 4 | LTS (-40°C) | 192 |
| 1PP2V | M-14-2 | 5.5 | IS dissipating time | 14.7 |
| 3PPWO4 | N-12 | 1.5 | | |
| 3PPWO2 | N-12 | 1.5 | | |
| 5PPWO2 | N-12 | 1.5 | | |
| 4OB(S)O1((C5)(V)) | I-2 | 6 | | |
| 2OB(S)O1((C5)(V)) | I-2 | 6 | | |
| Stabilizer II-3, X is -OH | | 0.005 | | |

### Example 3

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 9 | Δn | 0.109 |
| 3C1OWO2 | N-3 | 3 | Cp | 74 |
| 2CCWO2 | N-5 | 7 | Δε | -3.7 |
| 3CCWO2 | N-5 | 8 | K₁₁ | 15.3 |
| 3CC1OWO2 | N-6 | 2 | K33 | 16.8 |
| 3CPWO2 | N-11 | 5 | γ₁ | 76 |
| 3CLWO2 | N-25 | 6 | RT | 22.42 |
| 3PWO2 | N-10 | 6 | Tr | 15.00 |
| 3CCV | M-1-2 | 29 | CR | 1420 |
| 3CCV1 | M-1-2 | 4 | LTS (-40°C) | 192 |
| 1PP2V | M-14-2 | 5.5 | IS dissipating time | 16.8 |
| 3PPWO2 | N-12 | 1.5 | | |
| 2OB(S)OV(2F) | I-2 | 6 | | |
| 2OB(S)O1((C5)(V)) | I-2 | 8 | | |
| Stabilizer II-2, n=5, X is -O* | | 0.01 | | |

### Example 4

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 10 | Δn | 0.109 |
| 3C1OWO2 | N-3 | 3 | Cp | 73 |
| 2CCWO2 | N-5 | 7 | Δε | -3.5 |
| 3CCWO2 | N-5 | 6 | K₁₁ | 14.5 |
| 3CC1OWO2 | N-6 | 2 | K33 | 15.7 |
| 3CPWO2 | N-11 | 4 | γ₁ | 75 |
| 3CLWO2 | N-25 | 6 | RT | 23.11 |
| 3PWO2 | N-10 | 6 | Tr | 14.30 |
| 3CCV | M-1-2 | 29 | CR | 1330 |
| 3CCV1 | M-1-2 | 4 | LTS (-40°C) | 192 |
| 1PP2V | M-14-2 | 4 | IS dissipating time | 17.5 |
| 3CPP2V | M-30-3 | 4.5 | | |
| 3PPWO4 | N-12 | 1.5 | | |
| 3PPWO2 | N-12 | 2 | | |
| 2OB(S)OCF3 | I-2 | 6 | | |
| 2OB(O)OCF3 | I-1 | 5 | | |
| Stabilizer II-4, X is -O* | | 0.007 | | |

### Example 5

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 8 | Δn | 0.109 |
| 3C1OWO2 | N-3 | 3 | Cp | 74 |
| VCCWO2 | N-5 | 7 | Δε | -3.6 |
| 3CCWO2 | N-5 | 6 | K₁₁ | 14.6 |
| 3CC1OWO2 | N-6 | 2 | K33 | 17 |
| 3CPWO2 | N-11 | 4 | γ₁ | 73 |
| 3CLWO2 | N-25 | 7 | RT | 22.44 |
| 3PWO2 | N-10 | 7 | Tr | 15.20 |
| 3CCV | M-1-2 | 29 | CR | 1405 |
| 3CCV1 | M-1-2 | 4 | LTS (-40°C) | 216 |
| 1PP2V1 | M-14-2 | 4 | IS dissipating time | 15.9 |
| VCCP1 | M-22-2 | 4.5 | | |
| 3PPWO4 | N-12 | 1.5 | | |
| 3PPWO2 | N-12 | 1.5 | | |
| 5PPWO2 | N-12 | 1.5 | | |
| 4OB(S)OV(2F) | I-2 | 5 | | |
| 2OB(S)OV(2F) | I-2 | 5 | | |
| Stabilizer II-1, n=6, X is -COCH₃ | | 0.03 | | |

### Example 6

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 8 | Δn | 0.11 |
| 2CCWO2 | N-5 | 6 | Cp | 74 |
| 3CCWO2 | N-5 | 8 | Δε | -3.7 |
| 3CWPO2 | N-29 | 4 | K₁₁ | 15.9 |
| 3CLWO2 | N-25 | 7 | K33 | 17.2 |
| 3PWO2 | N-10 | 4 | γ₁ | 74 |
| 3CCV | M-1-2 | 31 | RT | 21.24 |
| 3CCV1 | M-1-2 | 4 | Tr | 14.90 |
| V2CCP1 | M-22-2 | 4 | CR | 1451 |
| 3PGP2V | M-37-2 | 4.5 | LTS (-40°C) | 144 |
| 3PPWO2 | N-12 | 1.5 | IS dissipating time | 20.6 |
| 2OB(S)O1((C5)(V)) | I-2 | 5 | | |
| 4OB(S)O1((C5)(V)) | I-2 | 5 | | |
| 2OB(S)OV(2F) | I-2 | 4 | | |
| 4OB(S)OV(2F) | I-2 | 4 | | |
| Stabilizer II-2, n=14, X is -O* | | 0.002 | | |

### Example 7

A liquid crystal composition comprising components in the percentages by weight as shown in the table below, and the performance test results are listed in the table below:

| Code of component | | Content (%) | Performance Test Results | |
|---|---|---|---|---|
| 3CLWO2 | N-25 | 8 | Δn | 0.11 |
| 3C1OWO2 | N-3 | 4 | Cp | 75 |
| VCCWO2 | N-5 | 6 | Δε | -3.5 |
| 3CC1OWO2 | N-6 | 2 | K₁₁ | 14.2 |
| 3CCWO2 | N-5 | 5 | K33 | 15.2 |
| 3CPWO2 | N-11 | 4 | γ₁ | 74 |
| 3CLWO2 | N-25 | 6 | RT | 23.35 |
| 3PWO2 | N-10 | 7 | Tr | 14.70 |
| 3CCV | M-1-2 | 30 | CR | 1298 |
| 3CCV1 | M-1-2 | 4 | LTS (-40°C) | 192 |
| VCVCP1 | M-29-2 | 6 | IS dissipating time | 20 |
| 3CPP2V1 | M-30-3 | 2 | | |
| 3PPWO4 | N-12 | 2 | | |
| 3PPWO2 | N-12 | 2 | | |
| 1VCPWO2 | N-11 | 3 | | |
| 2OB(O)O1((C5)(V)) | I-1 | 4 | | |
| 2OB(O)OV(2F) | I-1 | 5 | | |
| Stabilizer II-1, n=8, X is -OH | | 0.08 | | |

### Example 8

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 8 | Δn | 0.109 |
| 3C1OWO2 | N-3 | 3 | Cp | 74 |
| 2CCWO2 | N-5 | 8 | Δε | -3.6 |
| 3CCWO2 | N-5 | 8 | K₁₁ | 14.7 |
| 3CC1OWO2 | N-6 | 2 | K33 | 16.5 |
| 3CPWO2 | N-11 | 3 | γ₁ | 75 |
| 3CLWO2 | N-25 | 7 | RT | 22.98 |
| 3PWO2 | N-10 | 8 | Tr | 14.90 |
| 3CCV | M-1-2 | 29 | CR | 1373 |
| 3CCV1 | M-1-2 | 4 | LTS (-40°C) | 216 |
| 1PP2V | M-14-2 | 5.5 | IS dissipating time | 15.6 |
| 3PPWO4 | N-12 | 1.5 | | |
| 3PPWO2 | N-12 | 1.5 | | |
| 5PPWO2 | N-12 | 1.5 | | |
| 4OB(S)O1((C5)(V)) | I-2 | 5 | | |
| 2OB(S)O1((C5)(V)) | I-2 | 5 | | |
| Stabilizer II-1, n=4, X is -H | | 0.004 | | |

### Example 9

A liquid crystal composition comprising components in the percentages by weight as shown in the table below, and the performance test results are listed in the table below:

| Code of component | | Content (%) | Performance Test Results | |
|---|---|---|---|---|
| 3CWO2 | N-2 | 9 | Δn | 0.109 |
| 3C1OWO2 | N-3 | 3 | Cp | 75 |
| VCCWO2 | N-5 | 5 | Δε | -3.6 |
| 3CCWO2 | N-5 | 7 | K₁₁ | 14.8 |
| 3CC1OWO2 | N-6 | 5 | K33 | 16.9 |
| 3CPWO2 | N-11 | 4 | γ₁ | 76 |
| 3CLWO2 | N-25 | 7 | RT | 23.05 |
| 1PWO2 | N-10 | 5 | Tr | 14.90 |
| 3CCV | M-1-2 | 29 | CR | 1385 |
| 3CCV1 | M-1-2 | 6 | LTS (-40°C) | 192 |
| 4CC1OC3 | M-45 | 4 | IS dissipating time | 15.1 |
| 3PPWO4 | N-12 | 1.5 | | |
| 3PPWO2 | N-12 | 1.5 | | |
| 5PPWO2 | N-12 | 1 | | |
| 2OB(O)OV(2F) | I-1 | 6 | | |
| 2OB(S)O1((C5)(V)) | I-2 | 6 | | |
| Stabilizer II-3, X is -H | | 0.006 | | |

Comparing Examples 1-9 with Comparative Examples 1-3 of the present application, it can be seen that: Comparative Example 1 does not contain compound of formula I and it has a small elastic constant K, a small dielectric anisotropy, a low response speed, and a low contrast rate; Comparative Example 2 contains compound of formula I but does not contain the stabilizer having a specific structure, it has a relatively low image dissipating rate and a more severe image retention comparing with Comparative Example 1; In Comparative Example 3, the terminal group of the dibenzo-type compound differs from R₂ in compound of formula I as limited in the present application, resulting in a small elastic modulus K, a low contrast rate, and a poor low-temperature storage performance. In Examples 1-9, by means of designing and compounding of the compound of formula I and the specific stabilizer, the K value, the transmittance, and the contrast rate are improved, the dielectric anisotropy is increased, the response speed is improved and the low-temperature storage is enhanced; further, the ion dissipation rate in the device is improved, thereby the image retention is reduced and the issue of poor afterimage quality caused by the use of the high-dielectric compounds of formula I is addressed.

In summary, by means of compounding liquid crystal components with specific structures, the liquid crystal composition of the present application has larger elastic constant K values (K₁₁ is 14.2-15.9 and K₃₃ is 15.2-17.2), a lower rotational viscosity (γ₁ is 73-76 mPa·s), a shorter response time (RT is 21.24-23.35 ms), a higher response speed, a relatively high transmittance (Tr is 14.3%-15.2%), a contrast ratio CR being 1298-1451 while an appropriate clearing point, an appropriate optical anisotropy and an appropriate absolute value of dielectric anisotropy are maintained; the liquid crystal composition can be stably stored at -40°C for more than 144 h and has a better low-temperature storage stability; the liquid crystal composition has a wider nematic phase temperature range and a better contrast ratio; the IS dissipating time is short, the image sticking retention is reduced or the dissipation of the image retention is accelerated, and the overall use effect of a liquid crystal material is improved.

The applicant declares that the liquid crystal composition and the liquid crystal display device containing the same of the present application is illustrated by the above Examples, but the present application is not limited to the above Examples, that is, it does not mean that the implement of the present application must rely on the above Examples. It shall be clear to the person skilled in the art that any improvements of the present application, equivalent replacements of the raw materials used in the present application, the additions of any auxiliary components, the selection of specific manners or the like all fall into the protection scope and the disclosure scope of the present application.

## Claims

1. A liquid crystal composition comprising:
at least one compound of formula I: 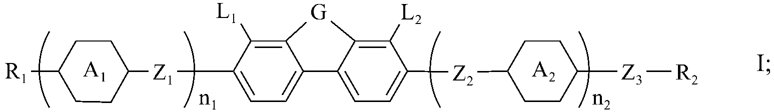 and
at least one stabilizer, the stabilizer is selected from a group consisting of the following compounds: 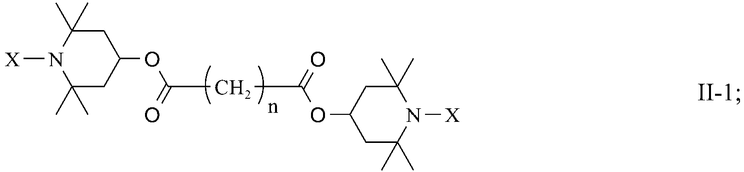 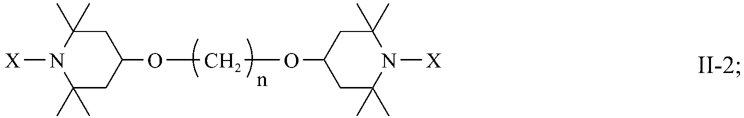 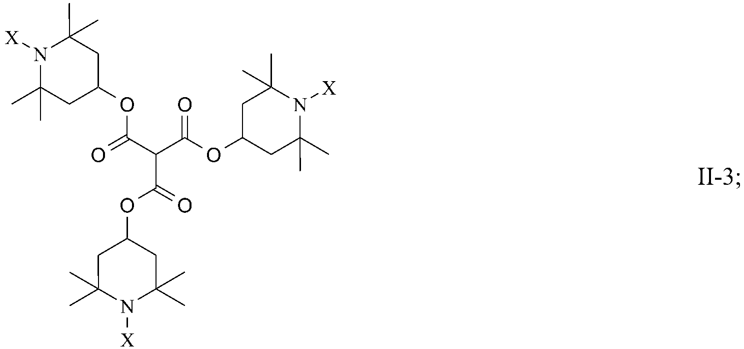 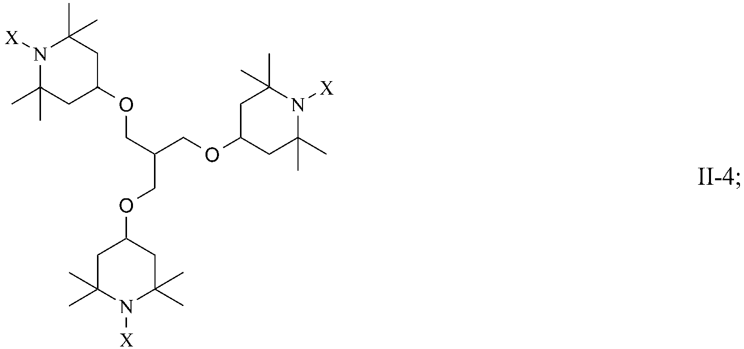
wherein, R₁ represents -H, halogen, C₁₋₁₂ linear or branched alkyl, 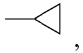 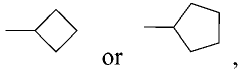 one or at least two nonadjacent -CH₂- in the C₁₋₁₂ linear or branched alkyl, 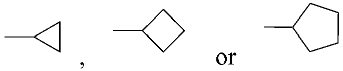 can each be independently replaced by -CH=CH-, -C=C-, -O-, -S-, -CO-, -CO-O- or -O-CO-, one or at least two -H in the aforesaid groups can each be independently substituted by -F or -Cl;
R₂ represents C₁₋₃ halogenated alkyl, 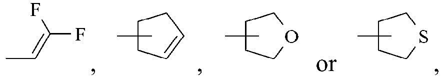 wherein one or at most two single bonds in 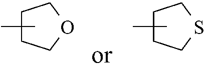 can be replaced by double bond;
ring 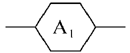 and ring 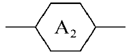 each independently represents 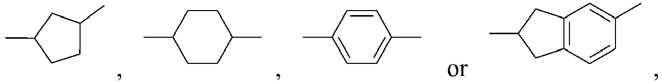 one or at least two -CH₂- in the 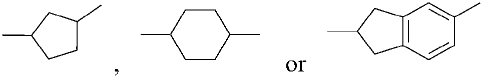 can be replaced by -O-; one or at most two single bonds in the rings can be replaced by double bond; one or at least two -H in the 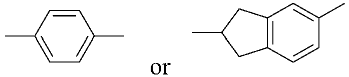 can be substituted by -F, -Cl, -CN, -CH₃ or -OCH₃, one or at least two -CH= in the rings can be replaced by -N=;
Z₁ and Z₂ each independently represents single bond, -O-, -S- -CO-O-, -O-CO-, -CH₂O-, -OCH₂-, -CH=CH-, -C=C-, -CH₂CH₂-, -CF₂CF₂-, -(CH₂)₄-, -CF₂O- or -OCF₂-;
Z₃ represents single bond, -O(CH₂)ₐ- or -S(CH₂)ₐ-; a represents an integer of 0-5;
L₁ and L₂ each independently represents -H, halogen, C₁₋₃ halogenated or unhalogenated alkyl, or C₁₋₃ halogenated or unhalogenated alkoxy;
G represents -O-, -S- -CO-, -CF₂-, -NH- or -NF-;
X represents -H, -OH, -O*, C₁₋₅ linear or branched alkyl; one or at least two nonadjacent -CH₂- in the C₁₋₅ linear or branched alkyl can each be independently replaced by -O- or -CO-; -O* represents oxygen radical;
n₁ represents 0 or 1;
n₂ represents 0, 1 or 2; when n₂=2, ring 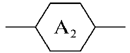 can be the same or different, Z₂ can be the same or different;
n represents an integer of 1-20.

2. The liquid crystal composition according to claim 1, wherein the compound of formula I is selected from a group consisting of the following compounds: 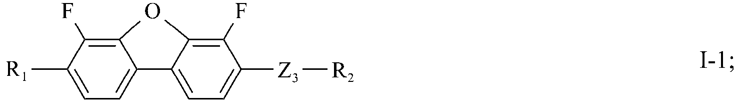 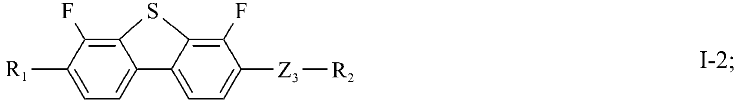 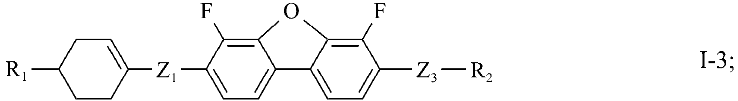 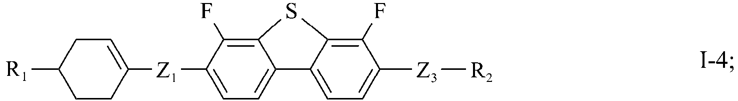 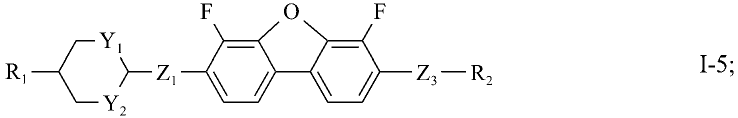 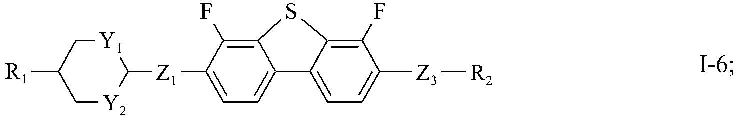 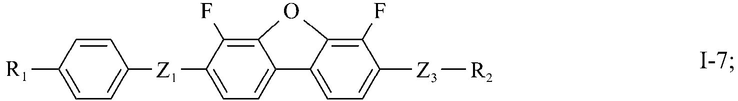 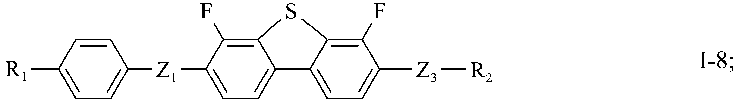 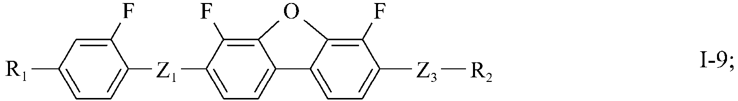 and 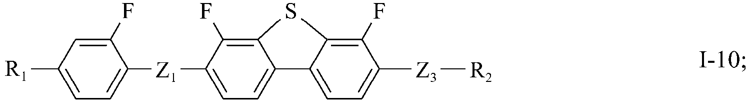
wherein, R₁, R₂ and Z₃ have the same limitation scopes as those in formula I;
Y₁, Y₂ each independently represents -O- or -CH₂-.

3. The liquid crystal composition according to claim 1, wherein, the percentage by weight of the compound of formula I in the liquid crystal composition is 1%-30%.

4. The liquid crystal composition according to claim 1, wherein, X represents -H, -OH, -O*, C₁₋₅ linear or branched alkyl, C₁₋₅ linear or branched alkoxy, or C₁₋₅ linear or branched acyl.

5. The liquid crystal composition according to claim 1, wherein, the percentage by weight of the stabilizer in the liquid crystal composition is 0.001%-0.1%.

6. The liquid crystal composition according to claim 1, wherein, the liquid crystal composition further comprises at least one compound of formula N: 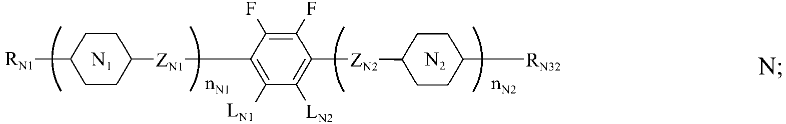
wherein, R_{N1} and R_{N2} each independently represents C₁₋₁₂ linear or branched alkyl, 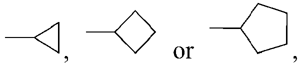 one or at least two nonadjacent -CH₂- in the C₁₋₁₂ linear or branched alkyl can each be independently replaced by -CH=CH-, -C≡ C-, -O-, -CO-, -CO-O- or -O-CO-;
ring 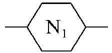 and ring 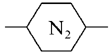 each independently represents 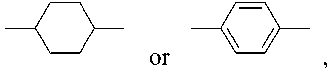 wherein one or at least two -CH₂- in 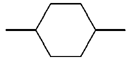 can be replaced by -O-, one or at most two single bonds in the rings can be replaced by double bond; wherein one or at least two -H in 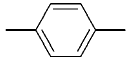 can each be independently substituted by -F, -Cl or -CN, one or at least two -CH= in the rings can be replaced by -N=;
L_{N1} and L_{N2} each independently represents -H, halogen, C₁₋₃ linear or branched alkyl, or C₁₋₃ linear or branched alkoxy;
Z_{N1} and Z_{N2} each independently represents single bond, -CO-O-, -O-CO-, -CH₂O-, -OCH₂-, -CH=CH-, -C=C-, -CH₂CH₂-, -CF₂CF₂-, -(CH₂)₄-, -CF₂O- or -OCF₂-;
n_{N1} represents 0, 1, 2 or 3, n_{N2} represents 0 or 1, and 0≤n_{N1}+n_{N2}≤3;
when n_{N1} represents 2 or 3, ring 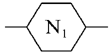 can be the same or different, Z_{N1} can be the same or different.

7. The liquid crystal composition according to claim 6, wherein, the compound of formula N is selected from a group consisting of the following compounds: 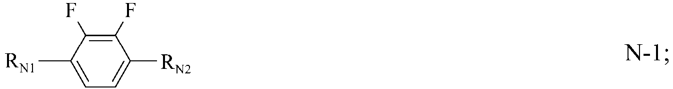 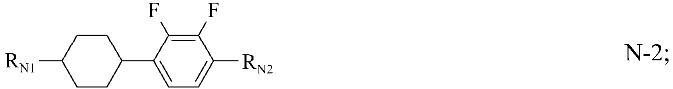 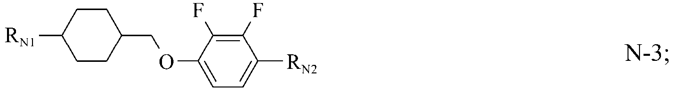 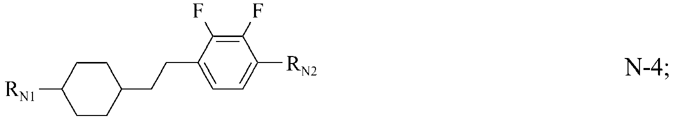 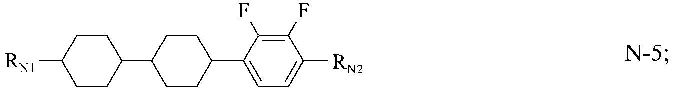 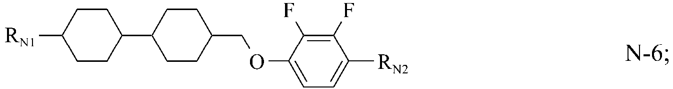 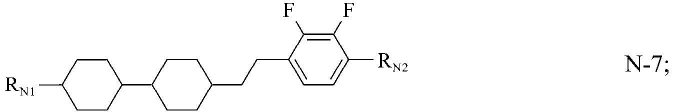 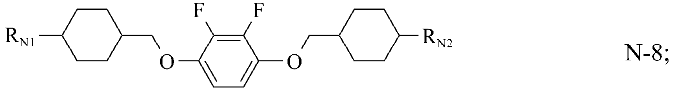 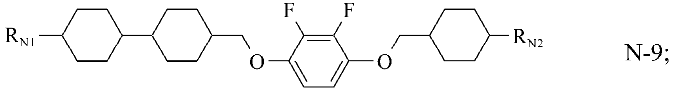 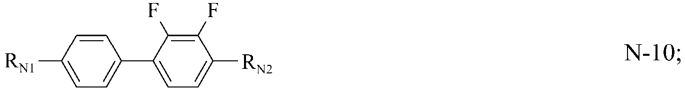 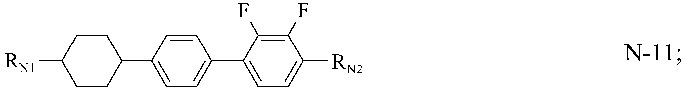 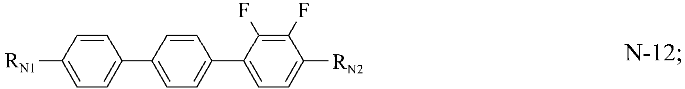 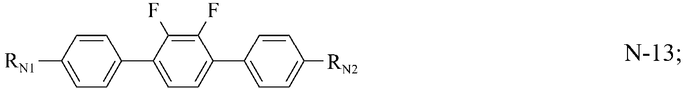 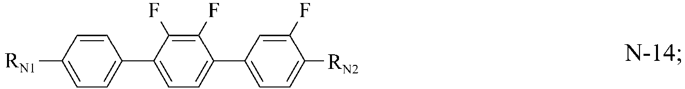 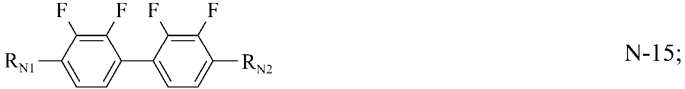 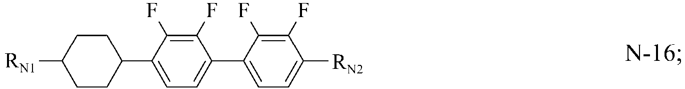 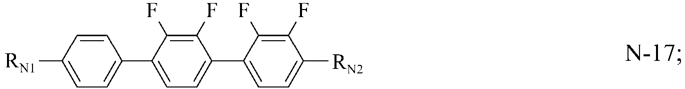 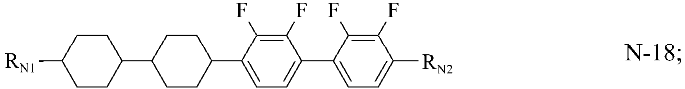 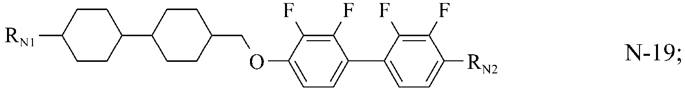 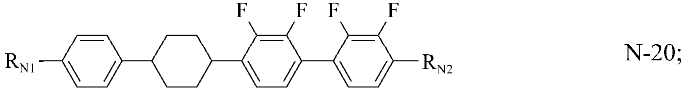 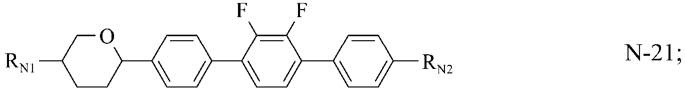 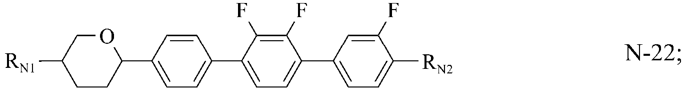 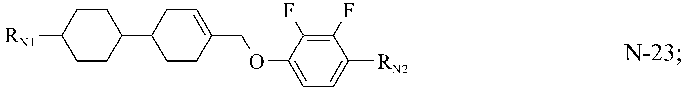 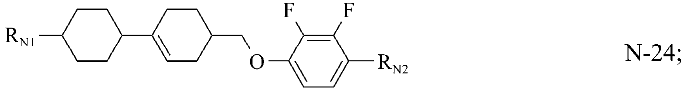 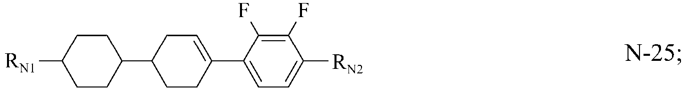 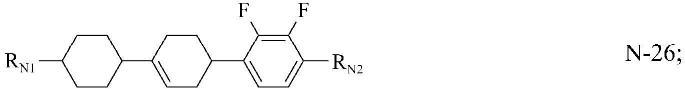 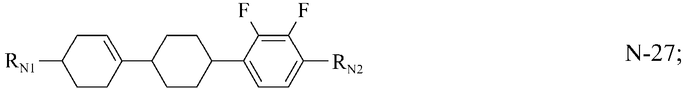 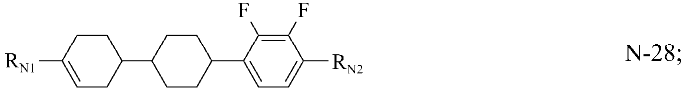 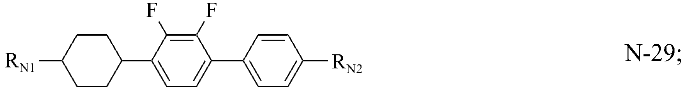 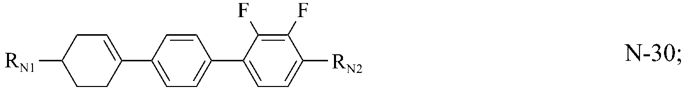 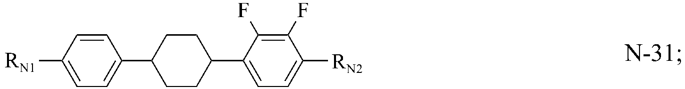 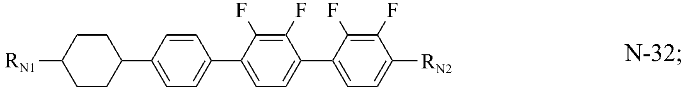 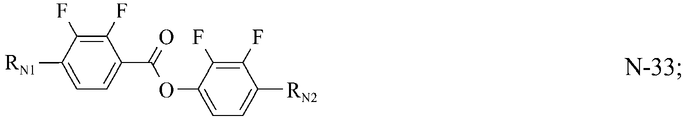 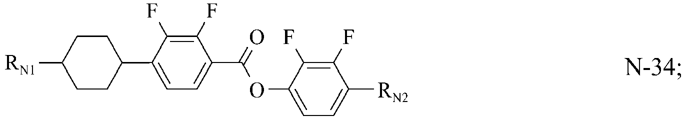 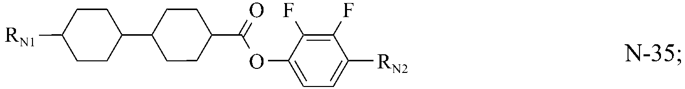 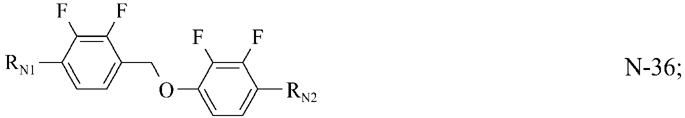 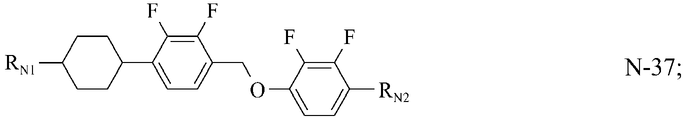 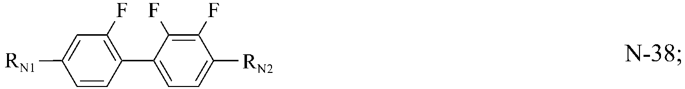 and 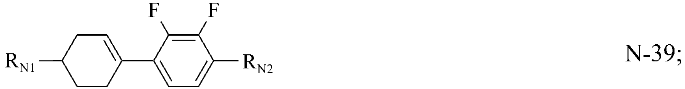 wherein, R_{N1} and R_{N2} have the same limitation scopes as those in formula N.

8. The liquid crystal composition according to claim 1, wherein, the liquid crystal composition further comprises at least one compound of formula M: 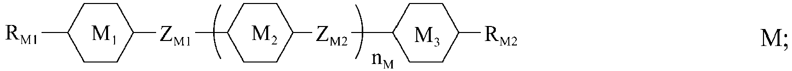
wherein, R_{M1} and R_{M2} each independently represents C₁₋₁₂ linear or branched alkyl, 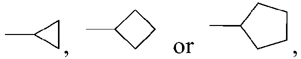 one or at least two nonadjacent -CH₂- in the C₁₋₁₂ linear or branched alkyl can each be independently replaced by -CH=CH-, -C=C-, -O-, -CO-, -CO-O- or -O-CO-;
ring 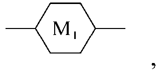 ring 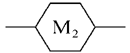 and ring 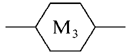 each independently represents 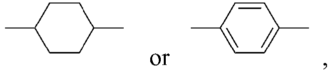 one or at least two -CH₂-in the 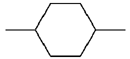 can be replaced by -O-, one or at most two single bonds in the rings can be replaced by double bond; at most one -H in the 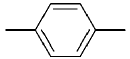 can be substituted by halogen;
Z_{M1} and Z_{M2} each independently represents single bond, -CO-O-, -O-CO-, -CH₂O-, -OCH₂-, -CH=CH-, -CH₂CH₂- or -(CH₂)₄-;
n_{M1} represents 0, 1, 2 or 3, wherein when n_{M1}=2 or 3, ring 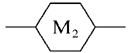 can be the same or different, Z_{M2} can be the same or different.

9. The liquid crystal composition according to claim 8, wherein, the compound of formula M is selected from a group consisting of the following compounds: 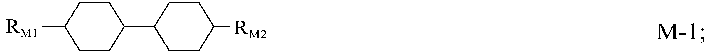 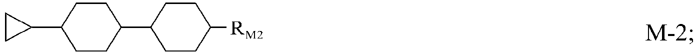 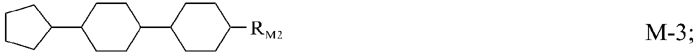 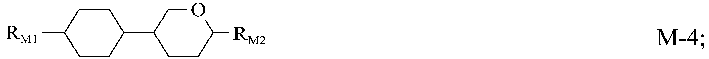 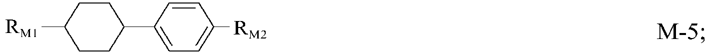 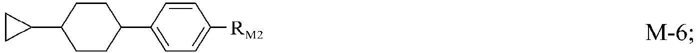 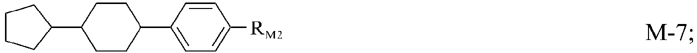 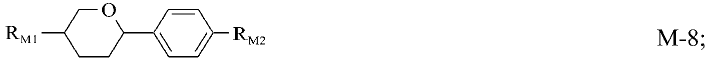 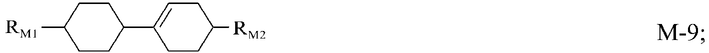 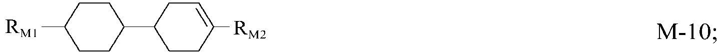 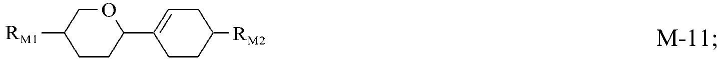 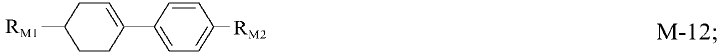 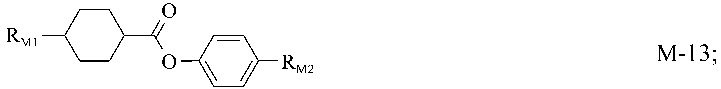 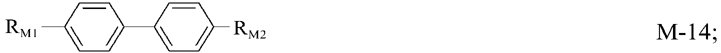 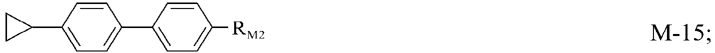 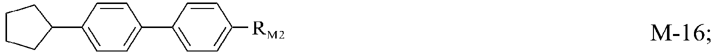 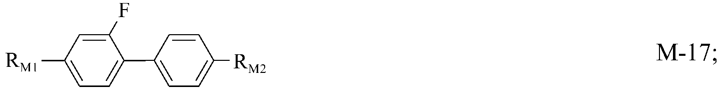 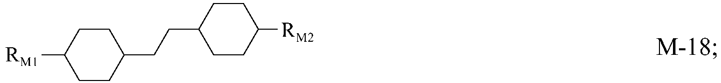 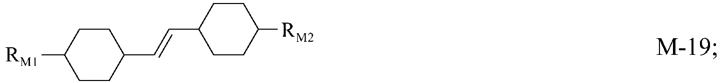 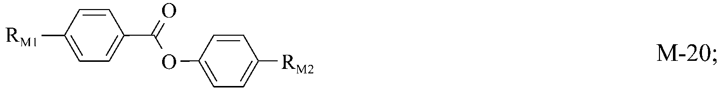 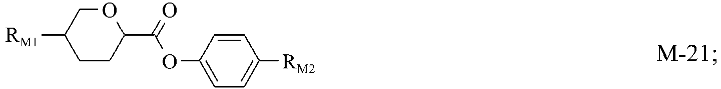 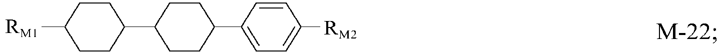 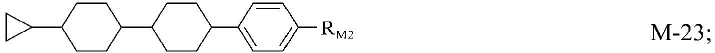 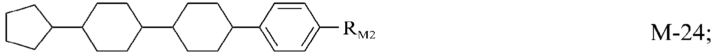 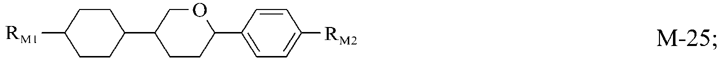 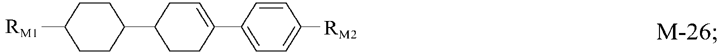 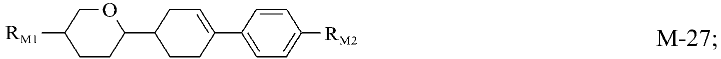 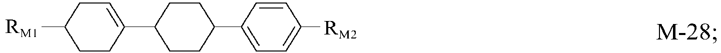 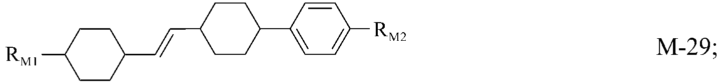 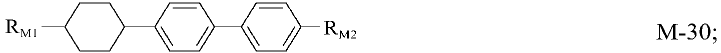 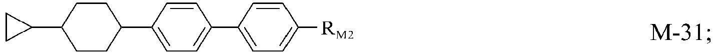 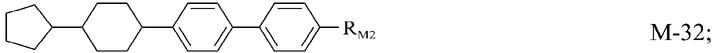 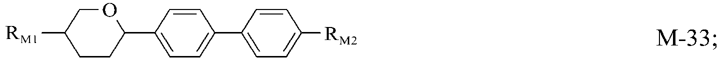 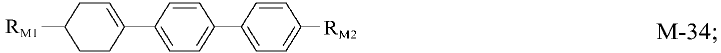 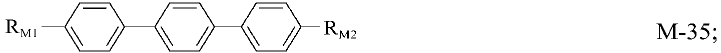 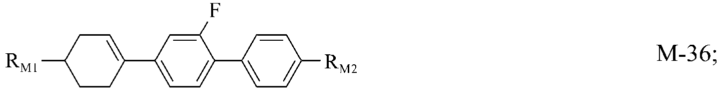 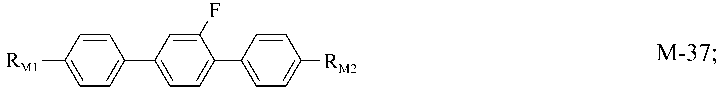 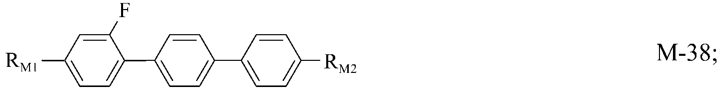 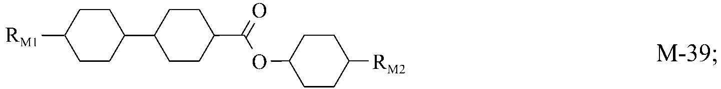 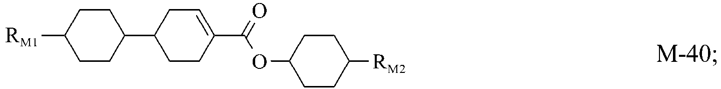 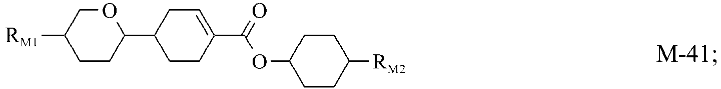 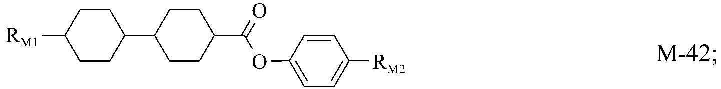 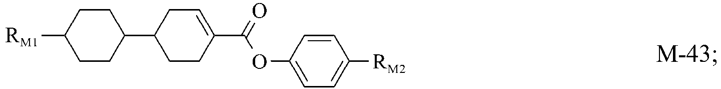 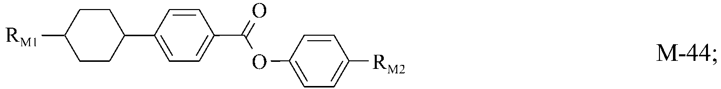 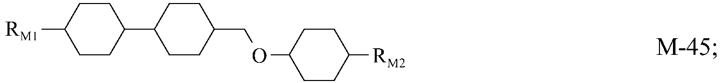 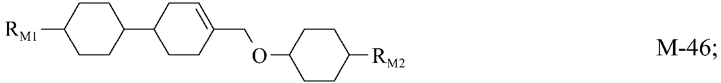 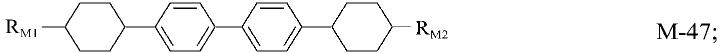 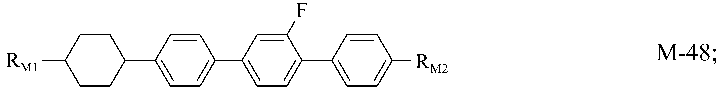 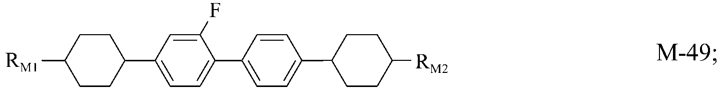 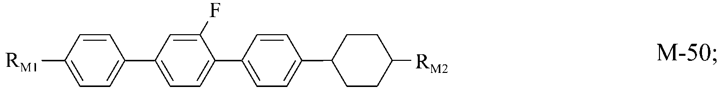 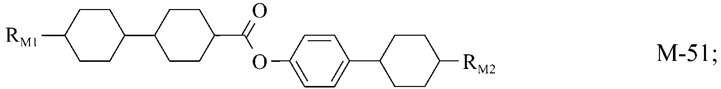 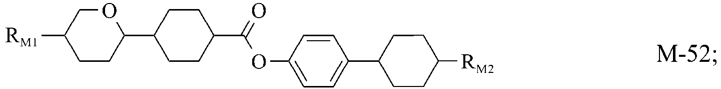 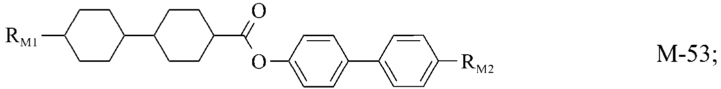 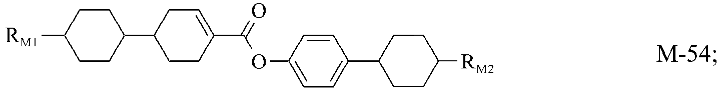 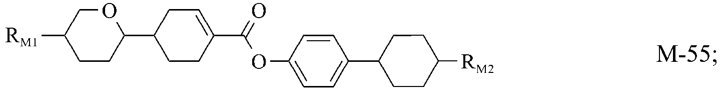 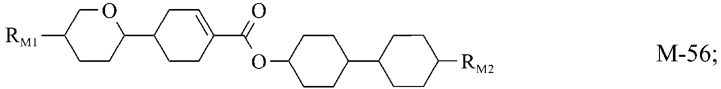 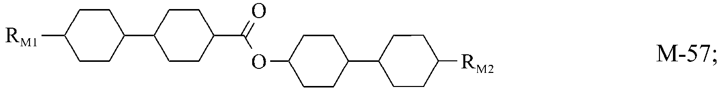 and 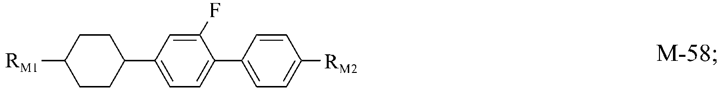 wherein, R_{M1} and R_{M2} each independently represents C₁₋₁₀ linear or branched alkyl, one or more than two nonadjacent -CH₂- in the C₁₋₁₀ linear or branched alkyl can each be independently replaced by -CH=CH-, -C=C-, -O-, -CO-, -CO-O- or -O-CO-.

10. A liquid crystal display device, comprising the liquid crystal composition of any one of claims 1-9.
